# EUROPÄISCHE PATENTSCHRIFT

(11) **EP 3 805 601 B1**
(45) Veröffentlichungstag und Bekanntmachung des Hinweises auf die Patenterteilung: **29.04.2026**
(21) Anmeldenummer: 20000348.1
(22) Anmeldetag: 28.09.2020
(51) Int. Cl.: F16G 13/06, B62M 1/00

(54) **FAHRRADKETTE MIT PARTIELL REDUZIERTER AUSSENKONTUR DER INNENLASCHE**
BICYCLE CHAIN WITH PARTIALLY REDUCED OUTER CONTOUR OF INTERNAL TAB
CHAÎNE DE VÉLO DONT LE CONTOUR EXTÉRIEUR DU MAILLON INTÉRIEUR EST PARTIELLEMENT RÉDUIT

(30) Priorität: 08.10.2019 DE 102019006974; 14.09.2020 DE 102020211481
(43) Veröffentlichungstag der Anmeldung: 14.04.2021
(73) Patentinhaber: SRAM Deutschland GmbH, 97424 Schweinfurt (DE)
(72) Erfinder: Braedt, Henrik, 97456 Dittelbrunn/OT Hambach (DE); Heyna, Sebastian, 97456 Dittelbrunn/OT Hambach (DE)

(56) Entgegenhaltungen:
- US-A- 2 219 125
- US-A1- 2017 234 403

## Beschreibung

Die vorliegende Erfindung betrifft eine Rollenkette für Fahrräder, bei der bestimmte, beim Schalten auf der Ritzelkassette am Hinterrad von einem größeren zu einem jeweils benachbarten kleineren Ritzel (auch bezeichnet als Kettenrad) auftretende Schaltprobleme vermieden werden. Der vorgenannte Schaltvorgang wird auch als Outboard-Schalten bezeichnet. Weiterhin betrifft die vorliegende Erfindung auch eine Innenlasche für eine solche Rollenkette, eine Antriebsanordnung mit zumindest zwei benachbarten Ritzeln und einer Fahrradkette, sowie ein Fahrrad-Antriebssystem.

In der nachfolgenden Erfindungsbeschreibung wie auch teilweise in den zugehörigen Figuren verwendete Orts- bzw. Richtungsangaben wie "links", "rechts", "vorne", "hinten", "oben", "unten" usw. entsprechen der Fahrerperspektive auf einem Fahrrad. In Bezug auf eine Fahrradkette oder deren Bestandteile beziehen sich die in der Anmeldung verwendeten Orts- bzw. Richtungsangaben auf das obere Trum der Fahrradkette im montierten Zustand am Fahrrad.

### Technischer Hintergrund

Ein Fahrrad kann mit einer Antriebsanordnung, wie z.B. einem Kettenantrieb, ausgestattet sein. Fahrrad-Antriebsanordnungen können verwendet werden, um das Drehmoment von einem Fahrer auf ein hinteres Laufrad zu übertragen, um das Fahrrad anzutreiben. Eine Antriebsanordnung kann zum Beispiel das Drehmoment von einer vorderen Kettenradanordnung über eine Kette auf ein hinteres Kettenrad oder Ritzel, etwa ein Ritzel einer sog. Ritzelkassette oder eines sog. Ritzelpakets, übertragen, um ein hinteres Laufrad anzutreiben. Eine solche Antriebsanordnung kann als Antriebsstrang bezeichnet werden.

Kettenradbaugruppen für Fahrräder können ein Kettenrad oder mehrere einzelne Kettenräder aufweisen. Die vorderen Kettenräder werden allgemein als Kettenblätter bezeichnet. Kettenblätter können mit Hilfe verschiedenartiger Befestigungsvorrichtungen befestigt werden. Ein Kettenblatt kann z.B. mit Kettenblattschrauben befestigt oder direkt an der Kurbel eines Fahrrades montiert werden. Die hinteren Kettenräder werden häufig als Ritzel bezeichnet. Eine Mehrzahl von hinteren Kettenrädern oder Ritzeln kann als Kassette, Ritzelkassette oder Ritzelpaket bezeichnet werden. Eine solche Kassette ist typischerweise so konfiguriert, dass sie an einem Freilaufteil eines hinteren Laufrades befestigt werden kann.

### Allgemeiner Aufbau einer Rollenkette

Eine allgemeine Rollenkette ist aus der US 2017/234403 A1 bekannt.

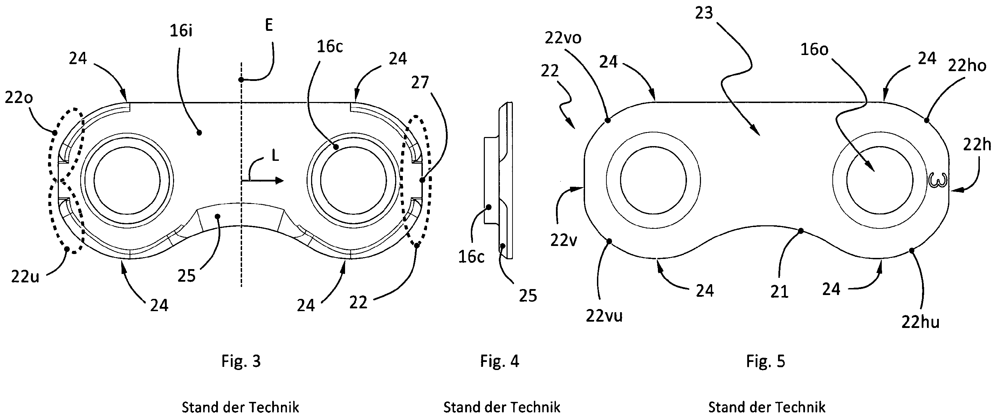

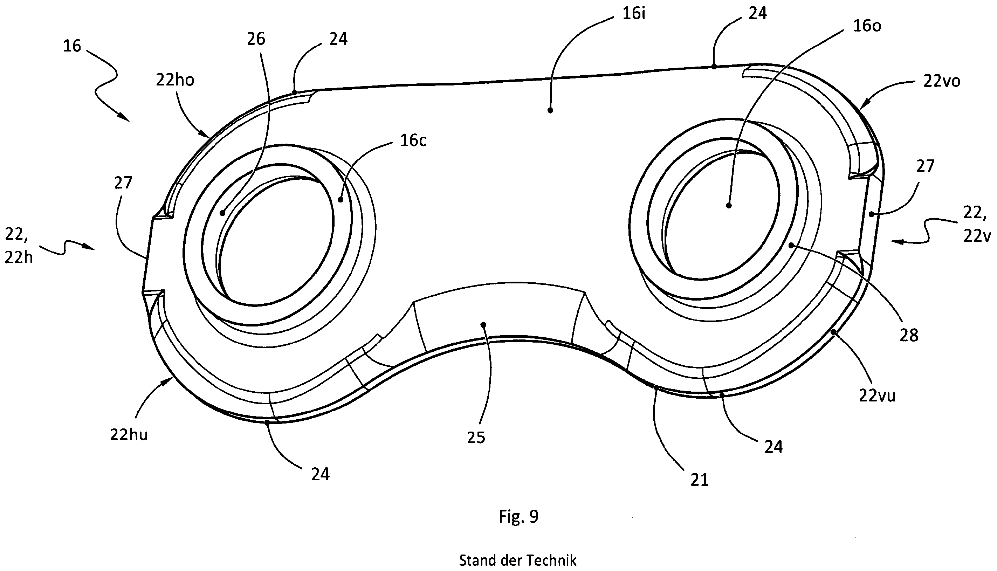

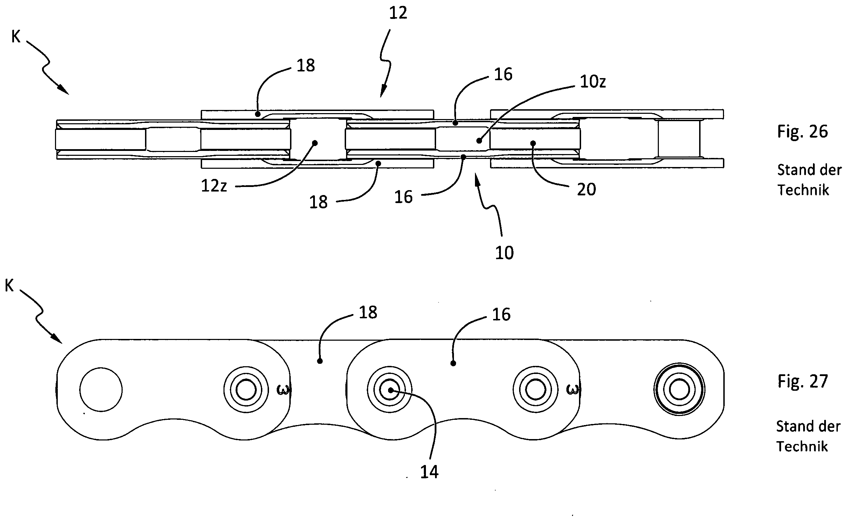

Rollenketten als aus dem Stand der Technik bekannte Antriebsketten für Fahrräder mit Kettenschaltung setzen sich üblicherweise zusammen aus zueinander schwenkbar angeordneten Kettengliedern, aus denen ein geschlossener Kettenstrang zur Antriebskraftübertragung ausgebildet wird. Jeweils ein Paar von Innenlaschen oder Außenlaschen bildet dabei ein Innenlaschen- oder ein Außenlaschen-Kettenglied (vgl. Fig. 26/27). Die Laschen verfügen jeweils über zwei Endbereiche mit üblicherweise abgerundeter Außenkontur, wobei die Endbereiche über einen Verbindungsbereich mit meistens taillierter Außenkontur verbunden sind (vgl. Fig. 3 bis 5). In den Endbereichen der Laschen sind Lochungen, üblicherweise konzentrisch zur abgerundeten Außenkontur, vorgesehen (vgl. Fig. 9).

### Reibungsverhältnisse beim Kontakt von Kettenrolle und Zahn am Kettenrad

Die alternierend angeordneten Innenlaschen- und Außenlaschen-Kettenglieder sind an den Kettengelenken mittels Kettenbolzen (auch als Kettenniete bezeichnet) schwenkbar miteinander verbunden (vgl. Fig. 26/27).

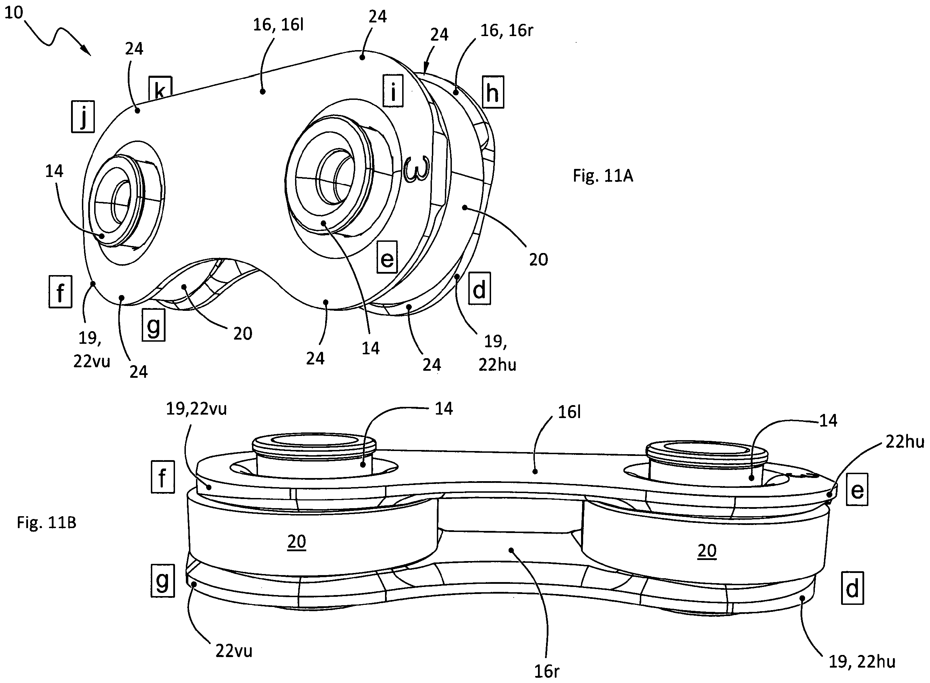

Dabei sind die Kettenbolzen in die Lochungen in den Außenlaschen eingepresst (vgl. Fig. 27), während zwischen den Lochungen in den Innenlaschen und den Kettenbolzen (vgl. Fig. 11A/B) jeweils Spiel vorhanden ist, um hierdurch die Drehbeweglichkeit zwischen den Kettengliedern zu gewährleisten.

Die Innenlaschen weisen an ihrer Innenseite im Bereich der Lochungen üblicherweise Kragen auf (vgl. Fig. 9), wobei auf einem Paar spiegelbildlich zueinander angeordneter Kragen jeweils eine Kettenrolle drehbar angeordnet ist (vgl. Fig. 11A/B).

### Reibungsverhältnisse an der Kettenrolle durch reibende Relativbewegung sowie durch Abwälzen beim normalen Ketteneingriff ohne Schaltvorgang

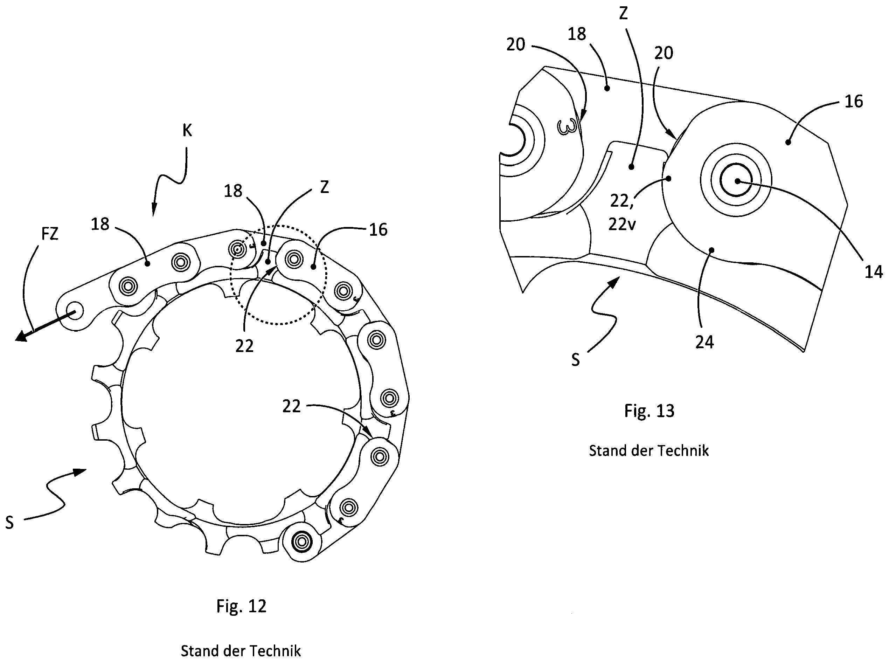

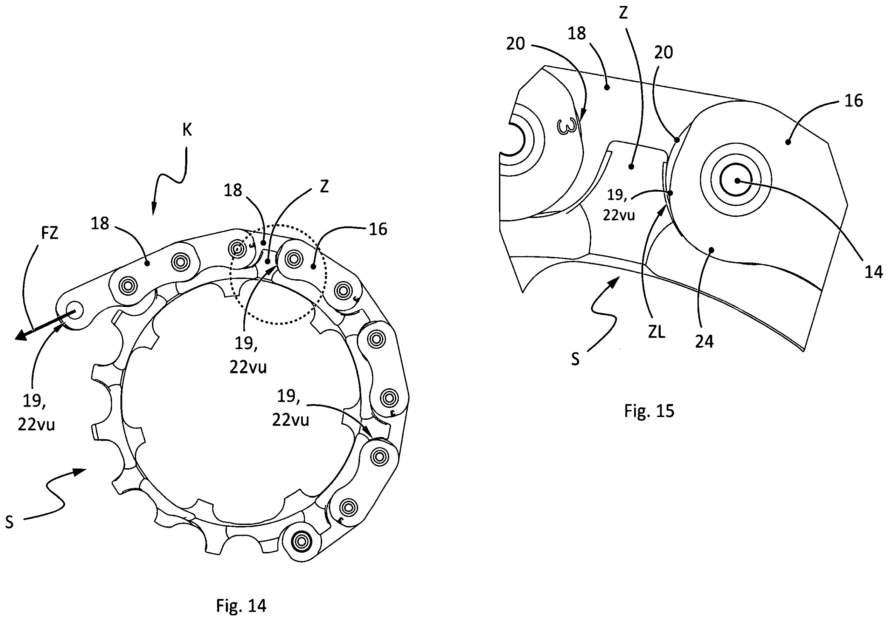

Eine derartige Anordnung drehbarer Kettenrollen ist Voraussetzung für günstige Reibungsverhältnisse zwischen Kettenrolle und Ritzelzahn, vor allem beim Vorgang des In-Eingriff-Kommens der Kette an den Ritzelzähnen im Antriebsbetrieb der Kette (vgl. Fig. 12 bis 15 sowie 30 bis 33). Bei diesem Vorgang wälzen die Kettenrollen auf der Außenkontur der jeweils neu in Eingriff kommenden Zähne ab. Der Kraftfluss zwischen Kettenglied und Ritzelzahn verläuft dabei durch Kontaktstellen, sowohl zwischen der zylinderförmigen Außenfläche der Rolle und der Lastflanke am Ritzelzahn (vgl. Fig. 15), als auch zwischen der zylinderförmigen Innenfläche der Rolle und dem Kragen (vgl. Fig. 9 bis 11B) der Innenlasche.

An der Kontaktstelle zwischen Kragen und Rolle liegen zumeist gute Schmierungsverhältnisse vor, und zwischen diesen beiden dort in Kontakt stehenden Elementen befinden sich großflächige Kontaktflächen.

An der Kontaktstelle zwischen der Lastflanke am Ritzelzahn und der Kettenrolle (vgl. Fig. 15) sind die Schmierungsverhältnisse üblicherweise wesentlich schlechter, und es gibt dort keinen großflächigen Kontakt. Andererseits findet dort auch keine gleitende, sondern eine weit überwiegend abwälzende Relativbewegung zwischen Rolle und Zahnflanke statt. Deshalb hält sich die Reibung auch dort in Grenzen.

### Eingriffsvorgänge und Führungsfunktion der Kettenlaschen

Die Zwischenräume zwischen den Laschen-Paaren der Kettenlaschen (vgl. Fig. 26) stellen Passagen für die Zähne der Kettenräder dar. Diese Passagen sind dafür vorgesehen, dass die Zähne der Kettenräder sicher darin eingreifen, und dass somit ein Abspringen der Kette von den Kettenrädern verhindert wird.

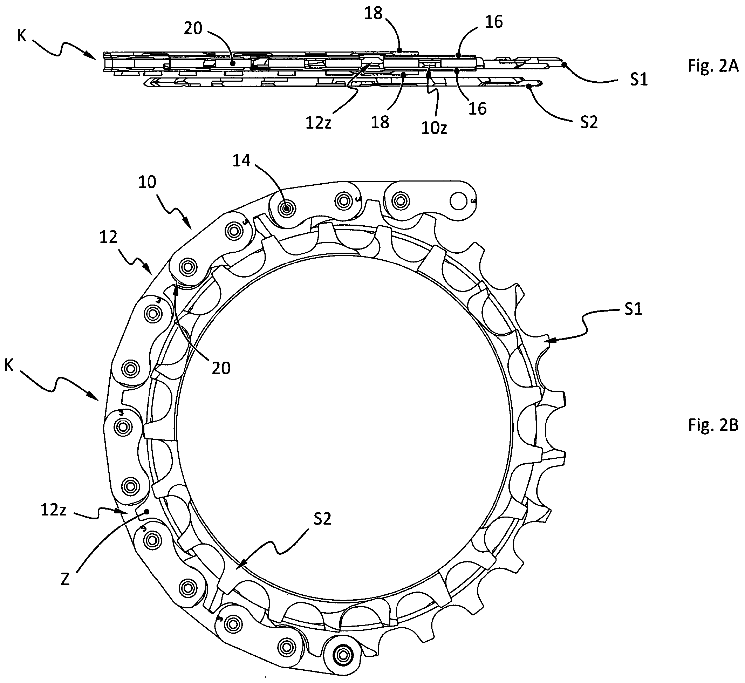

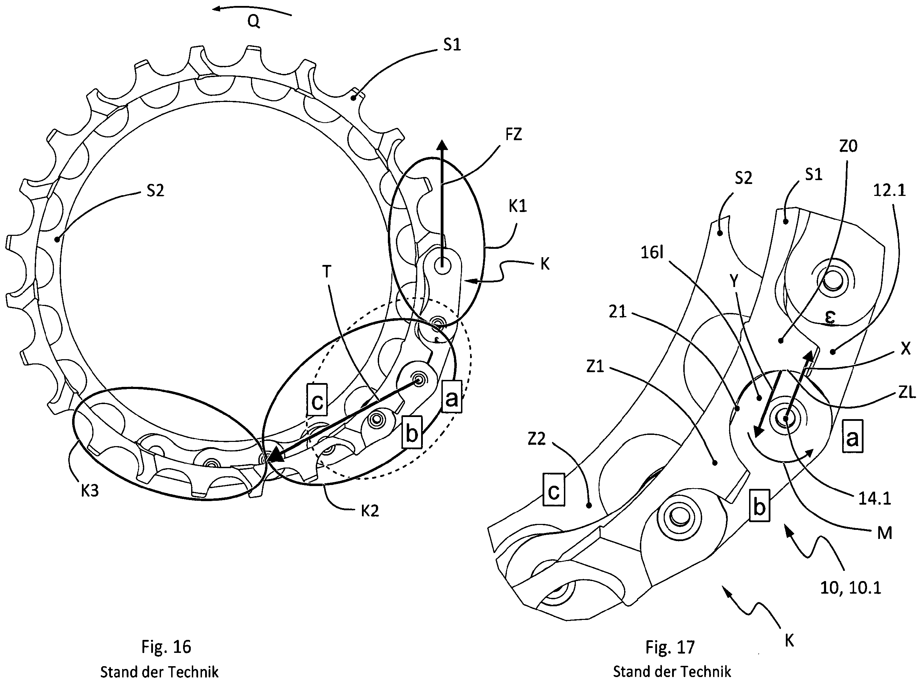

Dieser Eingriffsvorgang findet sowohl im Antriebsfall statt (vgl. Fig. 2a und 2b, 12 bis 15 sowie 30 bis 33), bei dem die Kette immer wieder mit den Zähnen an einem einzigen, rotierenden Kettenrad in Eingriff kommt, als auch beim Umlegen der Kette von einem Kettenrad auf das benachbarte Kettenrad zum Zweck des Gang-Umschaltens (vgl. Fig. 16 bis 25).

Nicht nur beim Umlegen der Kette, sondern auch im Antriebsfall kommt es häufig zu einem Schräglauf der Kette. Im Antriebsfall tritt Schräglauf dann auf, wenn die beteiligten Kettenräder nicht fluchten, das heißt, wenn sie nicht in einer Ebene liegen, was bei Fahrrädern mit Kettenschaltung der überwiegende Normalfall ist. Auch unter diesen Bedingungen muss es zu einem sicheren Eingreifen der Zähne des Kettenrades in die Zwischenräume der Kette kommen, um ein Abspringen der Kette zu vermeiden.

Ein Schaltvorgang hingegen bedeutet ein aktiv gesteuertes Umlegen der Kette vom kleineren zum größeren Kettenrad (Inboard-Schalten) oder ein Umlegen der Kette vom größeren zum kleineren Kettenrad (Outboard-Schalten).

### Fasen zur Eingriffserleichterung

Zur Erfüllung der oben beschriebenen Eingriffs- und Führungsfunktionen unter möglichst allen Bedingungen, darunter auch bei Schräglauf, besteht das Bestreben, die Zwischenräume zwischen den Laschen-Paaren möglichst groß in Richtung senkrecht zur Innenseite der Laschen (= Querrichtung der Kette = Rotationsachse der Kettenräder) zu gestalten (vgl. Fig. 2A, 20 und 26). An den enger zusammenstehenden Innenlaschen der Kette helfen die bereits angesprochenen Fasen im Bereich der Außenkonturen der Innenlaschen (vgl. Fig. 9 und 11B), einen verbreiterten Einlauftrichter für die in die Zwischenräume eintretenden Zahnspitzen der Zähne des Kettenrades zu schaffen.

Fasen an Kettenlaschen von Fahrradketten gehen in ihrer komplexen Gestaltung bereits im Stand der Technik deutlich über das hinaus, was unter dem Begriff der "Fase" (üblicherweise in einem Winkel von 45 Grad, z.B. zum Brechen einer scharfen Kante an einem Massivteil oder an einem Blechteil) gewöhnlich verstanden wird.

### Erörterung des Innenlaschenüberstandes (Längs- und Querüberstand)

Ist ein Überstand der Innenlaschen gegenüber den Kettenrollen vorhanden (vgl. z.B. Fig. 11A/B und 13), dann übernimmt dieser Innenlaschen-Überstand eine Führungsfunktion für die Kette, wenn sich diese im Eingriff mit dem Kettenrad bzw. Ritzel befindet.

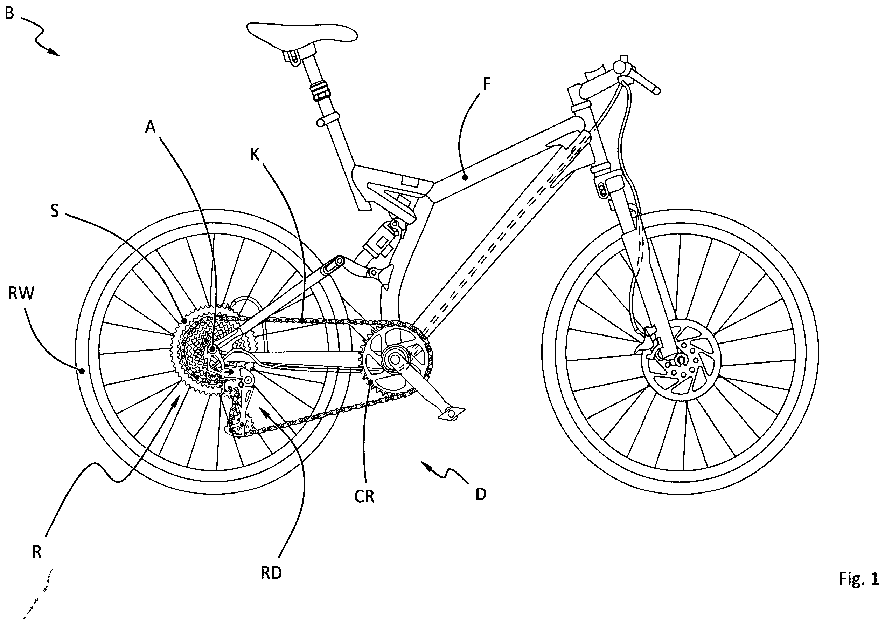

Ein Überstand der Innenlaschen-Außenkontur in Längsrichtung der Kette (Längsüberstand) reicht in den Raum zwischen einem Paar von Außenlaschen (vgl. Fig. 26) hinein. Dieser Längsüberstand wird wirksam (vgl. Fig. 12/13), wenn der Ritzelzahn in den Außenlaschen-Zwischenraum eintaucht, und die Kettenrolle sich immer mehr an die Zahnflanke annähert. Ein ausgeprägter Längsüberstand ist beispielsweise in der DE10127139A1 gezeigt, siehe dort Fig. 1 und 3.

Ein Überstand in Querrichtung der Kette (Querüberstand, vgl. z.B. Fig. 5, 11A und 13) kann eine Führungsfunktion erst dann übernehmen, wenn die Kettenrolle schon weit in die Zahnlücke eingetreten ist. Dieser Aspekt wird in der DE102008031162A1 thematisiert, vgl. dort Absatz [0017] sowie Fig. 1 und 4.

### Fasen am Innenlaschenüberstand

Infolge der unterschiedlichen Anforderungen an Längs- und Querüberstände werden diese in voneinander abweichenden Ausgestaltungen genutzt. In der DE102017009632A1 werden unterschiedlich geneigte Fasen am Innenlaschenüberstand in Längs- bzw. Querrichtung gezeigt (s. dort beispielsweise Fig. 3).

Ebenso wie für die Innenlasche allgemein gilt auch für den Innenlaschen-Überstand im Besonderen, dass mit der Anordnung von Fasen der Einlauftrichter für die Zahnspitzen verbreitert wird (vgl. Fig. 11A/B). Damit wird die Sicherheit vergrößert, dass die Zahnspitzen unter allen Betriebsbedingungen möglichst direkt in den Laschenzwischenraum eintreten, und dass die Kette nicht auf den Zahnspitzen aufreitet.

Bedingungen für das Schalten auf das größere Ritzel (Inboard-Schalten) oder auf das kleinere Ritzel (Outboard-Schalten)

Damit eine Fahrradkette zwischen benachbarten Kettenrädern umgelegt werden kann, muss sie durch eine entsprechende Kettenführungseinrichtung (an einem vorderen Kettenwerfer im Bereich des Tretlagers oder an einem hinteren Schaltwerk im Bereich der Hinterachse) in seitlicher Richtung parallel zur Drehachse des Kettenrades, bzw. senkrecht zur Erstreckungsebene des Kettenrades, verlagert werden, um die Kette so zunächst einmal außer Eingriff mit den Zähnen des zu verlassenden Kettenrades zu bringen.

Damit die Kette anschließend glatt und problemlos an dem benachbarten Kettenrad in Eingriff kommen kann, muss die Verlagerung der Kette nach Möglichkeit an einer bestimmten, konstruktiv festgelegten Drehwinkelposition der Kettenräder relativ zur Kette erfolgen. Dies gilt insbesondere dann, wenn die Kettenräder an definierten Stellen entlang ihres Umfangs entsprechende Schaltfeatures, also beispielsweise Vorsprünge und/oder Ausnehmungen aufweisen, die das Umlegen der Kette zwischen benachbarten Kettenrädern erleichtern sollen.

Im Fall des Schaltens auf das benachbarte größere Kettenrad bzw. Ritzel (Inboard-Schalten) sind üblicherweise Schaltfeatures im Sinne von Ausnehmungen am größeren Kettenrad bzw. Ritzel vorgesehen, um auf diese Weise Raum und ggf. auch Aufnahmevorsprünge für die Kettenglieder des überlaufenden Kettenabschnitts zu schaffen, insbesondere für die seitlich überstehenden Außenlaschen der Kette.

Im Fall des Schaltens auf das benachbarte kleinere Kettenrad (Outboard-Schalten, vgl. Fig. 16 bis 25) gelangt die Kette infolge des Wirkens der Kettenführungseinrichtung (hier der im Leertrum der Kette angeordnete, in den Figuren nicht dargestellte hintere Kettenumwerfer) außer Eingriff mit dem größeren Kettenrad, während weiterhin noch ein antreibender Eingriff des auslaufenden Kettenabschnitts mit dem größeren Kettenrad stattfindet (vgl. Fig. 16 bis 19).

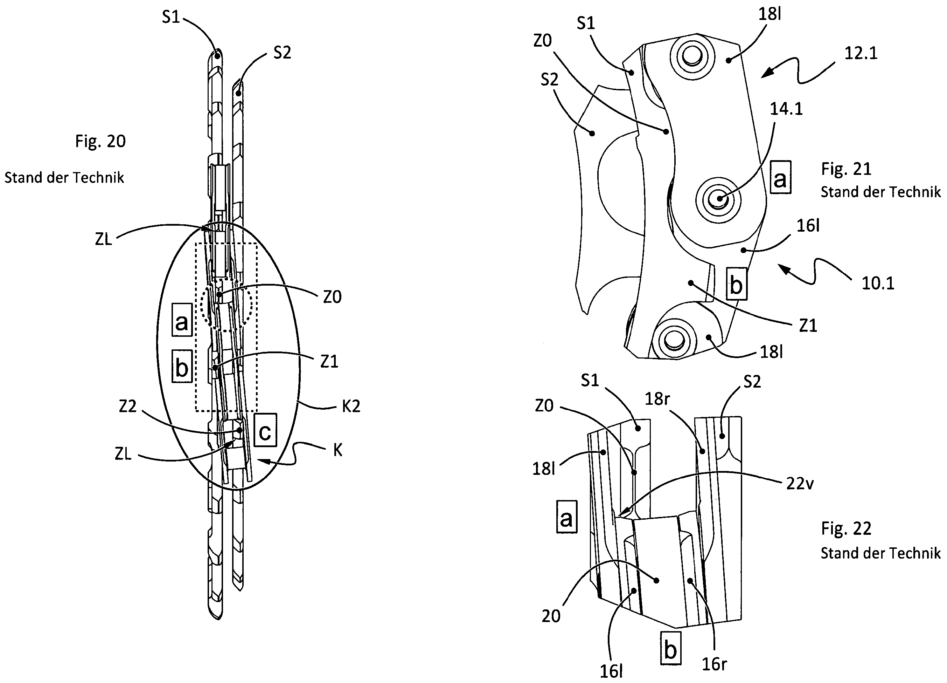

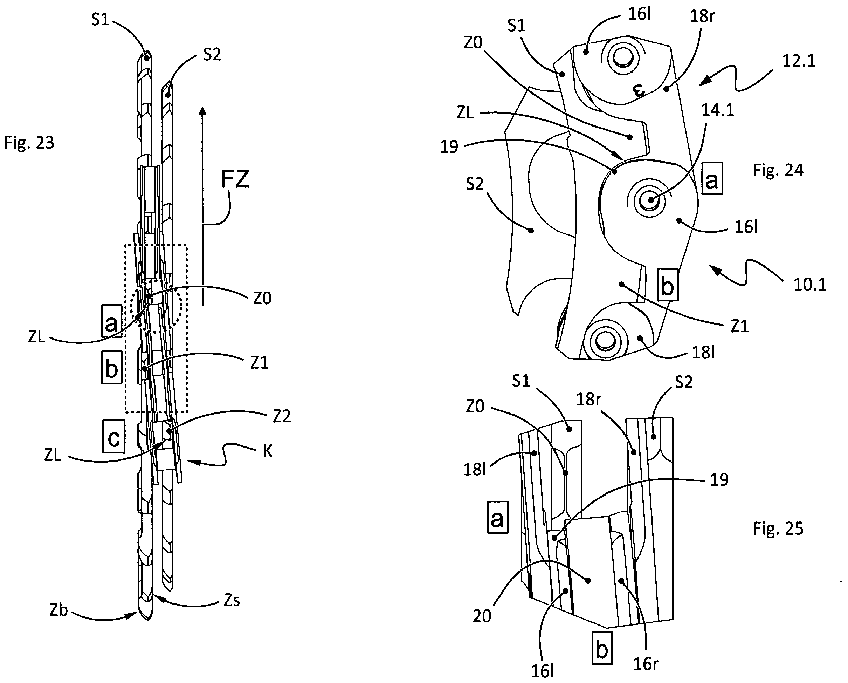

Hierbei muss insbesondere ein ausreichendes Maß an seitlicher Beweglichkeit der Kette gegenüber den Zähnen vorhanden sein (vgl. Fig. 20 und 23 - wobei die dort dargestellte seitliche Beweglichkeit der Kette lediglich schematisch angedeutet ist, da diese in Wirklichkeit eher einem graduellen, kurvenförmigen Übergang unter Beteiligung mehrerer Kettenglieder entspricht).

Diese seitliche Beweglichkeit der Kette kann, insbesondere bei vorhandenem Quer- wie auch Längsüberstand der Innenlaschenglieder (wie weiter oben beschrieben, vgl. insbesondere Fig. 13) und bei entsprechendem Verhältnis der Dicke der Zähne in Quer-Richtung zur lichten Weite zwischen den Ketteninnenlaschen eingeschränkt sein zumindest so lange, wie die Kette noch im Eingriff mit dem zu verlassenden Kettenrad steht.

Der Effekt der reduzierten seitlichen Beweglichkeit der Kette gegenüber den Zähnen im Zusammenhang mit dem Umlegen der Kette zum benachbarten Ritzel nur an vorbestimmten Stellen mit entsprechenden Schaltfeatures bzw. Schalthilfen wird beispielsweise in der DE102008031162A1 erörtert, vgl. dort z.B. Absatz [0007].

### Ablauf des Outboard-Schaltens

Beim Outboard-Schalten (also beim Umschalten vom größeren auf das benachbarte kleinere Ritzel) passiert zunächst ein bestimmtes Innenlaschen-Kettenglied einen bestimmten Zahn des größeren Ritzels auf dessen dem kleineren Ritzel zugewandten (outboardseitigen) Seite, vgl. bei "b" in Fig. 16 bis 25.

Daraufhin taucht ein in Ritzel-Drehrichtung nachfolgender Zahn des kleineren Ritzels in den Laschenzwischenraum eines Kettenglieds des überlaufenden Kettenabschnitts ein (vgl. bei "c" in Fig. 16 bis 25). Beim dargestellten Ausführungsbeispiel bzw. Gangsprung ist dies ein Außenlaschen-Kettenglied, bei anderen Zähnezahldifferenzen bzw. Ritzelgrößen kann es sich dabei auch um ein Innenlaschen-Kettenglied handeln.

Dieser Vorgang ist verbunden mit einem Abknicken des überlaufenden Kettenabschnitts nach radial innen um einen bestimmten Gelenkpunkt bzw. Kettenniet des entgegen der Drehrichtung letzten noch im Eingriff mit dem größeren Ritzel stehenden Außenlaschen-Kettenglieds (bei "a" in Fig. 16 bis 25).

Diese Abknickbewegung der Kette während des Umlegens auf das kleinere Kettenrad ist somit verknüpft mit einer Verdrehung des zugehörigen Innenlaschen-Gliedes ("b" in Fig. 16 bis 25) gegenüber dem vorangehenden Außenlaschen-Kettenglied, das noch im Eingriff am größeren Kettenrad ist ("a" in Fig. 16 bis 25), sowie mit einer dementsprechenden Bewegung der Peripherie der abgerundeten Außenkontur der linken abknickenden Innenlasche relativ gegenüber der angrenzenden Zahn-Lastflanke (vgl. Fig. 17, 19 und 24).

Liegt die Peripherie der Außenkontur der abknickenden Innenlasche dabei an dieser Zahn-Lastflanke an, was beim Stand der Technik der Fall ist (vgl. Fig. 17), so kommt es an dieser Stelle - anders als bei einem Kontakt zwischen Kettenrolle und Zahn des Kettenrades, bei dem ein reibungsarmer Abrollvorgang der Kettenrolle an der Flanke des Zahnes erfolgt - zu gleitender Reibung, die die schwenkende Bewegung des abknickenden Innenlaschen-Kettenglieds ("b" in Fig. 17), und somit den Umschaltvorgang, behindert.

Zusätzlich zu der im Stand der Technik an dieser Stelle entstehenden Reibung kann es je nach Geometrie der Lastflanke des dortigen, aus dem auslaufenden Kettenabschnitt zuletzt austretenden Ritzelzahns des größeren Ritzels auch zur Ausbildung eines Drehmoments "M" kommen (vgl. Fig. 17), welches sich aus der Kettenzugkraft X einerseits und aus der hierzu (geometrieabhängig) exzentrischen, von der Lastflanke ZL auf die Außenkontur der Innenlasche übertragenen Gegenkraft Y bilden kann.

Dieses Drehmoment versucht somit, das abknickende Kettenglied ("b" in Fig. 17) am Abknicken zu hindern und den überlaufenden Kettenabschnitt (vgl. Fig. 16) stattdessen zu strecken.

Ein weiterer Effekt der mit der Lastflanke des zuletzt austretenden Ritzelzahns beim Stand der Technik kollidierenden vorderen Peripherie der linken Innenlasche des abknickenden Innenlaschen-Kettenglieds (vgl. Fig. 17, 20 und 22) liegt darin, dass hierdurch nicht nur die erwünschte reibungslose Abknickbewegung dieses Innenlaschen-Kettenglieds gestört wird, sondern auch die bereits vor dieser Abknickbewegung beginnende seitliche Verlagerung des überlaufenden Kettenabschnitts (vgl. Fig. 20/22) durch das Schaltwerk, durch welche das Outboard-Schalten eingeleitet wird.

Diese im Kontaktbereich zwischen der Außenperipherie der Innenlasche des abknickenden Kettenglieds "b" mit dem zuletzt austretenden Ritzelzahn des größeren Ritzels auftretenden Reibungskräfte und Reaktionsmomente sind insbesondere dann kritisch, wenn, was wünschenswert ist, die sog. "Tangentialbedingung" beim Outboard-Schalten besonders gut erfüllt werden soll.

"Tangentialbedingung besonders gut erfüllt" bedeutet, dass der zwischen den Ritzeln überlaufende Kettenabschnitt (vgl. Fig. 16 und 20) eine theoretische Tangente an das kleinere Kettenrad, ausgehend von dem bereits in das kleinere Kettenrad eingreifenden, einlaufenden Kettenabschnitt hin zu dem noch im Eingriff mit dem größeren Ritzel stehenden, auslaufenden Kettenabschnitt möglichst eng abbildet (vgl. Fig. 16).

Kettenradanordnungen bzw. Ritzelpakete sind heute mittels diverser Schaltfeatures an genau festgelegten Stellen sowie mittels einer exakt mit den Schaltfeatures abgestimmten, relativen Rotationswinkelposition zwischen jeweils benachbarten Ritzeln so gestaltet, dass die Kettenrollen der Kette beim Schaltfeature-gestützten Outboard-Schalten sowie bei erfüllter Tangentialbedingung exakt in die Zwischenräume zwischen den Zähnen des kleineren Kettenrads bzw. Ritzels einlaufen, ohne in Kontakt mit dessen Zahnspitzen zu kommen oder gar auf diesen aufzureiten.

Diese angestrebte Erfüllung der Tangentialbedingung führt im Fahrbetrieb somit dazu, dass der beim Schalten auftretende sog. Schaltruck entsprechend gering ausfällt bzw. sogar ausbleibt. Mit anderen Worten ist der beim Schaltvorgang zwischen den Ritzeln überlaufende Kettenabschnitt bei ideal erfüllter Tangentialbedingung vollständig gestreckt, und gleichzeitig greifen die sich in beiden Richtungen an den überlaufenden Kettenabschnitt anschließenden, auslaufenden und einlaufenden Kettenabschnitte beide gleichzeitig kraftübertragend in das größere bzw. kleinere Ritzel ein, so dass auch während des Schaltvorgangs keinerlei Drehmomentunterbrechung erfolgt.

Mit nochmals anderen Worten bedeutet ein Schaltvorgang mit ideal erfüllter Tangentialbedingung des überlaufenden Kettenabschnitts einen faktisch nahezu lautlosen und auch in Antriebsrichtung ruckfreien Schaltvorgang, und stellt somit das anzustrebende Ideal dar.

Da jedoch beim Outboard-Schaltvorgang, wie oben beschrieben, schon geringe Reibungs- oder sonstige Störkräfte, wie beispielsweise auch die ggf. entstehenden Drehmomente "M", den Schräglauf sowie den dabei angestrebten tangentialen Verlauf des überlaufenden Kettenabschnitts stören und damit unkontrollierbar verlängern können, kommt der Vermeidung dieser Störeinflüsse große Bedeutung zu. Denn kommt es aufgrund dieser Störeinflüsse zu einer ungewollten Abweichung des Kettenweges vom vorstehend beschriebenen, angestrebten Verlauf im Bereich des überlaufenden Kettenabschnitts, so kann dies dazu führen, dass der einlaufende Kettenabschnitt (vgl. Fig. 16) am kleineren Ritzel auf den Zahnspitzen aufreitet, und im weiteren Verlauf des Schaltvorgangs sodann dort einen Zahn oder sogar mehrere Zähne des kleineren Ritzels überspringt.

Dies wiederum führt beim Abschluss des Schaltvorgangs zu einem schlagartigen Nach-Vorne-Springen des auslaufenden, des überlaufenden sowie des einlaufenden Kettenabschnitts, und somit auch des gesamten, ggf. unter hoher Zugspannung stehenden Lasttrums der Kette, um dasselbe Maß. Derartiges ist nicht nur für den Fahrer störend und unter Umständen gefährlich, z.B. durch damit verbundenes Abrutschen vom Pedal, sondern belastet den gesamten Antriebsstrang in nicht vorgesehener und damit potenziell schädigender bzw. die Lebensdauer beeinträchtigender Weise.

### Erkennen der Wirkzusammenhänge

Die Anmelderin ist der Auffassung, dass vorliegend bereits das Erkennen der Wirkzusammenhänge zu den lange Zeit nicht verstandenen Outboard-Schaltfehlern einen maßgeblichen Teil der erfinderischen Tätigkeit ausmacht.

Dies wird nicht zuletzt durch die detaillierte obenstehende Analyse des Standes der Technik mit dessen Nachteilen ersichtlich. Insbesondere gilt dies für die beim Stand der Technik vorhandene und vorstehend dargelegte Problematik, nach der das abknickende Innenlaschen-Kettenglied "b" des überlaufenden Kettenabschnitts an seiner Schwenkbewegung um den Kettenniet gehindert wird, da die vordere Peripherie der linken Innenlasche dieses Kettenglieds an der Lastflanke des zuletzt austretenden Ritzelzahns des größeren Ritzels anliegt und reibt.

Wie beschrieben, können zusätzlich zu dieser unerwünschten Reibung sogar Drehmomente entstehen, die das abknickende Innenlaschen-Kettenglied entgegen seiner Abknickbewegung strecken, und somit den für ruckfreies Schalten erforderlichen tangentialen Einlauf des überlaufenden Kettenabschnitts in die Verzahnung des kleinen Ritzels stören bzw. verunmöglichen. Weiterhin stört die Kollision der vorderen Peripherie der linken Innenlasche des abknickenden Kettenglieds auch bereits den seitlichen Schräglauf des überlaufenden Kettenabschnitts, welcher den Schaltvorgang einleitet.

Die vorstehend ausführlich beschriebene Problematik ist beim Stand der Technik unverändert gegeben. Dies hängt damit zusammen, dass die oben dargelegten Zusammenhänge und Ursachen für die beim Outboard-Schalten unter Last auftretenden Schaltfehler, besonders der Schaltruck aufgrund des Überspringens von Ritzelzähnen durch den auslaufenden Kettenabschnitt, trotz vielfacher Analysen bisher unbekannt geblieben waren.

Denn bei der Betrachtung und Analyse von Umschaltvorgängen hin zum kleineren benachbarten Ritzel wurden trotz der im Stand der Technik bereits hochgradig verfeinerten Ritzelgeometrieen, insbesondere unter Last, immer noch Schaltfehler beobachtet, die sich in dem vorstehend beschriebenen Überspringen der Kette äußerten, und für die es keine Erklärung gab.

Daher kommt nach Überzeugung der Anmelderin bereits der Erkenntnis und Darstellung der Zusammenhänge und Gründe für diese Schaltfehler, als Voraussetzung für die Aufgabenstellung der vorliegenden Erfindung, Erfindungsqualität zu.

### Aufgabe der Erfindung

Mit diesem Hintergrund besteht die Aufgabe der vorliegenden Erfindung darin, die im Stand der Technik vorliegenden, vorstehend beschriebenen Nachteile zu überwinden, und damit das Outboard-Schalten, besonders unter Last, weiter zu verbessern. Die Anmelderin hat erkannt, dass hierzu insbesondere ein reibender wie auch ein normalkraftübertragend pressender Kontakt zwischen der vorderen linken bzw. inboardseitigen Längsperipherie der abknickenden Innenlasche einerseits und der Lastflanke des zuletzt austretenden Ritzelzahns des größeren Ritzels andererseits vermieden werden muss.

Wie oben ausführlich dargestellt, hat die Anmelderin im Sinne der Entdeckung einer bisher unerkannten Aufgabe die Erkenntnis gewonnen, dass dieser reibende bzw. pressende Kontakt, bzw. generell die Kollision zwischen dem linken vorderen Innenlaschenüberstand und der Lastflanke am zuletzt austretenden Zahn des größeren Ritzels eine der Hauptursachen für im Stand der Technik noch verbliebene Schaltfehler beim Outboard-Schalten ist.

Hieraus wurde die erfinderische Aufgabenstellung formuliert, den reibenden bzw. pressenden Kontakt zwischen Innenlasche und Zahn zu verhindern, um auf diese Weise die angestrebte Tangentialbedingung des überlaufenden Kettenabschnitts beim Outboard-Schalten auch unter Last reproduzierbar zu gewährleisten.

### Erfindungsgemäße Lösung

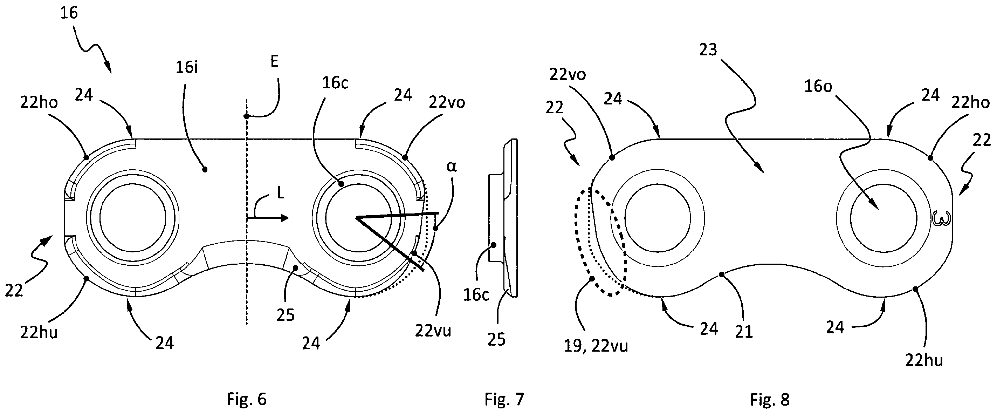

Gelöst wurde diese im Stand der Technik bislang nicht bekannte und damit erfinderische Aufgabenstellung in ebenfalls erfinderischer Weise dadurch, dass der vordere Überstand der linken bzw. inboardseitigen Ketten-Innenlasche definiert in einem bestimmten Bereich zurückgenommen wird, in welchem er nicht zu den weiter oben beschriebenen Ketten-Führungsfunktionen benötigt wird (vgl. insbesondere Fig. 6 bis 8, 10 bis 11B sowie 25), nämlich zumindest in einem vorderen unteren Längsendabschnitt der Innenlaschen-Außenperipherie. Dieser bestimmte Bereich ist so gewählt, dass er dann, wenn die Innenlasche in einer Fahrradkette an einem Fahrrad verbaut ist, beim Outboard-Schalten von einem größeren Ritzel zu einem benachbarten kleineren Ritzel der Lastflanke eines Ritzelzahns des größeren Ritzels gegenüberliegt, der bei dem Schaltvorgang zuletzt aus einem auslaufenden Kettenabschnitt austritt.

Durch diese spezifische partielle Rücknahme des vorderen linken bzw. inboardseitigen Innenlaschen-Überstands wird vermieden, dass dieser Innenlaschen-Überstand, wie oben beschrieben, die einleitende seitliche Bewegung des überlaufenden Kettenabschnitts sowie die Abknickbewegung des Innenlaschen-Kettengliedes beim Outboard-Schalten durch einen pressenden oder reibenden Kontakt mit der vorgenannten Lastflanke behindert, bzw. dieser Abknickbewegung durch Drehmomentbildung sogar entgegenwirkt (vgl. insbesondere Fig. 17 sowie 20/22).

Die erfindungsgemäße Lösung zeichnet sich auch dadurch aus, dass sie unabhängig ist von spezifischen Betriebsbedingungen wie beispielsweise von der Kettenzugkraft im Zugtrum der Kette, weiterhin von Parametern bei der Auslegung der Verzahnung wie Zähnezahl, radiale Tiefe des Zahnfußes, also des Zahnzwischenraums zwischen zwei in Umfangsrichtung benachbarten Zähnen, sowie insbesondere auch vom Grad des Verschleißes an den Lastflanken der Zähne.

Erfindungsgemäß ist vorgesehen, dass der Überstand der Innenlasche gegenüber der jeweils zugeordneten Kettenrolle in einem vorderen unteren Längsendbereich der Innenlaschen-Außenperipherie im Vergleich zum Überstand in einem vorderen oberen Längsendbereich oder/und in einem hinteren unteren Längsendbereich der Innenlaschen-Außenperipherie reduziert und zumindest bereichsweise negativ ist. Die Außenkontur der Innenlasche kann also insbesondere nur an einer einzigen Stelle bzw. in einem einzigen Bereich zurückgesetzt sein, nämlich nur genau in dem Bereich, in dem es ansonsten beim Outboard-Schalten zu einem unerwünschten Reibkontakt zwischen der Lastflanke des beim Schaltvorgang zuletzt austretenden Ritzelzahns und der inboardseitigen Innenlasche kommen würde.

Unter einem Begriff wie "vorderer unterer Längsendbereich" ist dabei ein unterer Teil oder Abschnitt des vorderen Längsendbereichs der Innenlasche zu verstehen, wobei sich Richtungsangaben, wie einleitend erwähnt, auf das obere Trum der Fahrradkette im montierten Zustand am Fahrrad beziehen. Entsprechend ist ein vorderer oberer Längsendbereich ein oberer Teil oder Abschnitt des vorderen Längsendbereichs, und ein hinterer oberer bzw. unterer Längsendbereich ist ein oberer bzw. unterer Teil oder Abschnitt des hinteren Längsendbereichs. "Negativer Längsüberstand" bedeutet, dass in einer Seitenansicht die Kettenrolle im jeweiligen Bereich über die Innenlasche hervorsteht. Die "zugeordnete" Kettenrolle für den vorderen Längsendbereich ist die vordere Kettenrolle, für den hinteren Längsendbereich ist es die hintere Kettenrolle eines Kettenglieds.

Um die Innenlasche in zwei verschiedenen, durch Drehung um 180° auseinander hervorgehenden Orientierungen in eine Kette einbauen zu können, kann der Überstand der Innenlasche gegenüber der jeweils zugeordneten Kettenrolle weiter auch in einem hinteren oberen Längsendbereich der Innenlaschen-Außenperipherie im Vergleich zum Überstand in einem vorderen oberen Längsendbereich oder/und einem hinteren unteren Längsendbereich der Innenlaschen-Außenperipherie reduziert und bevorzugt zumindest bereichsweise negativ sein.

Der Überstand der Innenlaschen-Außenperipherie über die zugeordnete Kettenrolle kann in einem Winkelbereich von beispielsweise etwa 45° reduziert oder negativ sein, wie er in Figur 6 angedeutet ist.

Weiterhin wird Schutz beansprucht für eine Fahrradkette mit alternierend angeordneten Innenlaschen-Kettengliedern und Außenlaschen-Kettengliedern, die mittels Kettenbolzen schwenkbar miteinander verbunden sind, wobei an jedem Kettenbolzen eine Kettenrolle vorgesehen ist, und wobei die Innenlaschen-Kettenglieder erfindungsgemäße inboardseitige Innenlaschen aufweisen, wie sie zuvor beschrieben wurden. Grundsätzlich kann vorgesehen sein, dass für jedes Innenlaschen-Kettenglied nur der Überstand der inboardseitigen Innenlasche gegenüber der jeweils zugeordneten Kettenrolle in einem vorderen unteren Längsendbereich der Innenlaschen-Außenperipherie im Vergleich zum Überstand in einem hinteren unteren Längsendbereich der Innenlaschen-Außenperipherie der inboardseitigen Innenlasche sowie im Vergleich zum Überstand in einem vorderen unteren Längsendbereich und einem hinteren unteren Längsendbereich der Innenlaschen-Außenperipherie der outboardseitigen Innenlasche reduziert und bevorzugt zumindest bereichsweise negativ ist. Dies entspricht einem reduzierten Überstand nur im Bereich "f" des in Figur 11 dargestellten Innenlaschen-Kettenglieds.

Um die Kette in zwei verschiedenen Laufrichtungen montieren zu können, ist es auch möglich, dass für jedes Innenlaschen-Kettenglied der Überstand der inboardseitigen Innenlasche gegenüber der jeweils zugeordneten Kettenrolle in einem vorderen unteren Längsendbereich der Innenlaschen-Außenperipherie der inboardseitigen Innenlasche im Vergleich zum Überstand in einem hinteren unteren Längsendbereich reduziert und bevorzugt zumindest bereichsweise negativ ist, und wobei der Überstand der outboardseitigen Innenlasche in einem hinteren unteren Längsendbereich der Innenlaschen-Außenperipherie im Vergleich zum Überstand in einem vorderen unteren Längsendbereich der Außenperipherie der outboardseitigen Innenlasche reduziert und bevorzugt zumindest bereichsweise negativ ist. Dies entspricht einem reduzierten Überstand nur in den Bereichen "f" und "d" des in Figur 11 dargestellten Innenlaschen-Kettenglieds.

Auch ist es möglich, etwa aus Fertigungs- oder Design-Gründen, dass für jedes Innenlaschen-Kettenglied die inboardseitige Innenlasche und die outboardseitige Innenlasche jeweils einen reduzierten vorderen unteren Längsüberstand und einen reduzierten hinteren unteren Längsüberstand aufweisen, die im Vergleich zum vorderen oberen Längsüberstand und zum hinteren oberen Längsüberstand reduziert sind, was einem reduzierten Überstand in den Bereichen "d", "e", "f" und "g" in Fig. 11 entspricht.

Um die Kette in allen möglichen Montagerichtungen verwenden zu können, kann insbesondere bei einer Kette ohne oben/unten-Asymmetrie vorgesehen sein, dass für jedes Innenlaschen-Kettenglied der Überstand der inboardseitigen Innenlasche in einem vorderen unteren Längsendbereich sowie einem hinteren oberen Längsendbereich der Innenlaschen-Außenperipherie im Vergleich zum Überstand in einem vorderen oberen Längsendbereich und einem hinteren unteren Längsendbereich der Innenlaschen-Außenperipherie der inboardseitigen Innenlasche reduziert und bevorzugt zumindest bereichsweise negativ ist, und dass der Überstand der outboardseitigen Innenlasche in einem vorderen oberen Längsendbereich sowie einem hinteren unteren Längsendbereich im Vergleich zu einem Überstand in einem vorderen unteren Längsendbereich und einem hinteren oberen Längsendbereich der Innenlaschen-Außenperipherie der outboardseitigen Innenlasche reduziert und bevorzugt zumindest bereichsweise negativ ist.. Dies entspricht einem reduzierten Überstand in den Bereichen "f" , "i", "d" und "k" des in Figur 11 dargestellten Innenlaschen-Kettenglieds.

Die Kettenlaschen der Fahrradkette können eine oben/unten Asymmetrie aufweisen, also insbesondere am unteren (dem Kettenrad zugewandten) Rand eine taillierte Außenkontur zwischen den Längsendbereichen und am oberen (dem Kettenrad abgewandten) Rand eine geradlinig verlaufende Außenkontur zwischen den Längsendbereichen aufweisen.

Weiterhin wird Schutz beansprucht für eine Antriebsanordnung für ein Fahrrad, mit einem größeren Ritzel und einem benachbarten kleineren Ritzel sowie einer erfindungsgemäßen Fahrradkette wie sie vorstehend beschrieben ist, wobei aufgrund des bereichsweise reduzierten Längsüberstands der inboardseitigen Innenlaschen beim Outboard-Schalten die Lastflanke des zuletzt aus dem auslaufenden Kettenabschnitt austretenden Ritzelzahns des größeren Ritzels nicht mit der Außenperipherie der inboardseitigen Innenlasche des ersten abknickenden Innenlaschen-Kettengliedes in Berührung kommt.

Dabei ist besonders bevorzugt vorgesehen, dass ein beim Outboard-Schalten vom größeren zum kleineren Ritzel überlaufender Kettenabschnitt zumindest näherungsweise eine Tangente an das kleinere Ritzel bildet.

Schließlich wird auch Schutz beansprucht für ein Fahrrad-Antriebssystem umfassend geradzahnzahlige Kettenräder mit alternierend dicken und dünnen Zähnen sowie einer erfindungsgemäßen Kette oder einer erfindungsgemäßen Antriebsanordnung, wie sie zuvor beschrieben wurden. Der Begriff "Kettenrad" kann sich dabei sowohl auf das vordere Kettenrad bzw. die vorderen Kettenräder (soweit vorgesehen) wie auch auf die Ritzel des hinteren Ritzelpakets beziehen.

Die erfindungsgemäße Kette kann weiterhin besonders vorteilhaft eingesetzt werden in Verbindung mit Kettenrädern mit geradzahliger Zähnezahl, die in alternierender Weise angeordnete dicke und dünne Zähne aufweisen, was Gegenstand beispielsweise der DE102015219522A1 ist. Bei derartigen Kettenrädern (vgl. auch Fig. 20 und 23) erfolgt eine Führung der Kette nicht nur an den Innenlaschen-Gliedern, sondern auch an den Außenlaschen-Gliedern, in deren Laschenzwischenraum die dicken Zähne eintreten.

Die erfindungsgemäße Kette kann in vorteilhafter Weise auch mit oben/untenasymmetrischen Kettenlaschen versehen bzw. kombiniert werden. Eine Kette mit derartigen asymmetrischen Kettenlaschen ist beispielsweise aus der DE102017009632A1 bekannt. Eine solche Kette wird grundsätzlich so montiert bzw. verwendet, dass die taillierte Seite der Kette radial zu den Kettenrädern bzw. Ritzeln weist, während die nicht taillierte Seite der Kette radial nach außen und von den Kettenrädern bzw. Ritzeln abgewandt ist.

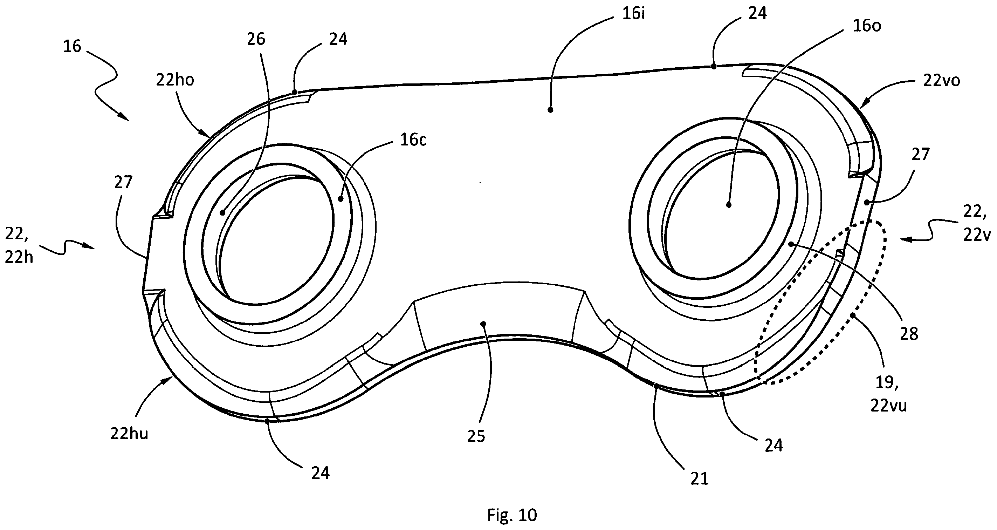

Bei einer solchen Kombination der erfindungsgemäßen, partiellen Reduktion der Innenlaschen-Außenkontur mit einer oben/unten-asymmetrischen Kette kann z.B. (vgl. Fig. 10) an der vorderen unteren, den Zähnen der Kettenräder zugewandten, taillierten Seite der Ketteninnenlasche (vgl. Fig. 6) zur Vermeidung des Kontakts mit der Zahn-Lastflanke der Überstand bereichsweise weggelassen werden, während an der oberen, von den Zähnen abgewandten Seite weiterhin ein Innenlaschen-Überstand vorgesehen sein kann (vgl. Fig. 3 bis 8), auch um dort einen möglichst großen Materialquerschnitt der Innenlaschen und damit eine hohe Traglast bzw. Zugfestigkeit der Kette zu erhalten.

Die Vorteile der erfindungsgemäßen Kette in einer Ausführungsform wie vorstehend mit oben/unten-asymmetrischen Kettenlaschen, in Kombination mit Kettenrädern mit dicken und dünnen Zähnen, wie ebenfalls weiter oben beschrieben, können auch kombiniert werden. In diesem Fall bestehen nur noch sehr geringe Anforderungen zum Vorhandensein von Innenlaschen-Überstand zum Zweck der Führung der Kette auf den Zähnen (vgl. Fig. 13 sowie oben unter "Erörterung des Innenlaschenüberstandes").

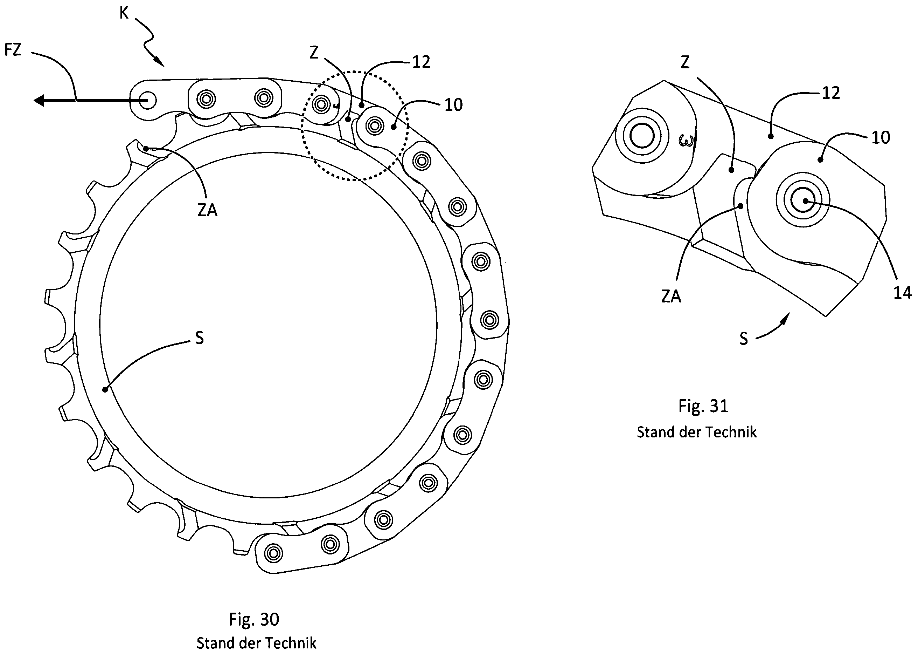

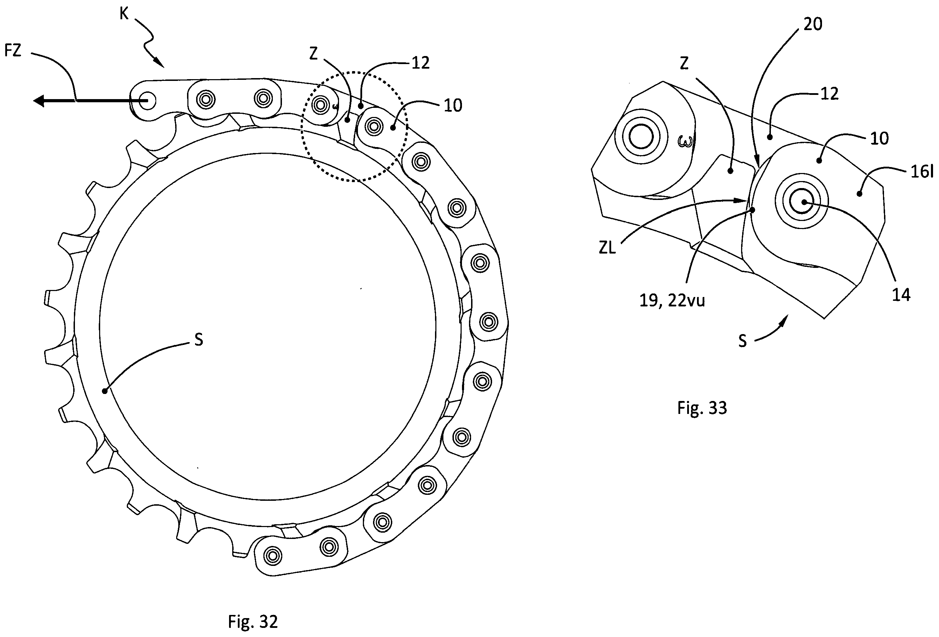

Ein weiterer Vorteil der erfindungsgemäßen Kette ergibt sich während des normalen Kettenlaufs ohne Schaltvorgang. Aufgrund des erfindungsgemäß partiell zurückgenommenen Innenlaschen-Längsüberstands können die auf der linken Seite der Ritzel zur Aufnahme des Innenlaschen-Längsüberstands im Stand der Technik vorgesehenen Ausnehmungen bzw. Ausfräsungen (vgl. Fig. 30/31) reduziert werden oder sogar entfallen (vgl. Fig. 32/33).

Hierdurch wird die Zahnfestigkeit erhöht und die Notwendigkeit zur Bearbeitung der Ritzel bei der Herstellung reduziert. Dieser Vorteil kommt nicht nur bei Mehrfach-Ritzelpaketen am Hinterrad zum Tragen, sondern auch bei Mehrfach- und Einfach-Kettenrädern im Bereich des Tretlagers bzw. an der Tretkurbel eines Fahrrads.

Die Einzelheiten der Erfindung lassen sich aus dem Vorstehenden, in Zusammenschau mit den Fig. 6 bis 8, 10 bis 11B, 14/15, 18/19, 23 bis 25, 28/29 sowie 32/33 entnehmen, jeweils im Vergleich zu bzw. in Gegenüberstellung zu den darstellungsmäßig entsprechenden Fig. 3 bis 5, 9, 12/13, 16/17, 20 bis 22, 26/27 sowie 30/31, welche die Situation der erstgenannten Figuren, jedoch mit einer Kette gemäß dem Stand der Technik zeigen.

Der Erfindungskern geht besonders deutlich aus einer Zusammenschau der Fig. 17 und 19 sowie 22 und 25 hervor, zusammen mit den vorstehenden Erläuterungen und der nachfolgenden Figurenbeschreibung.

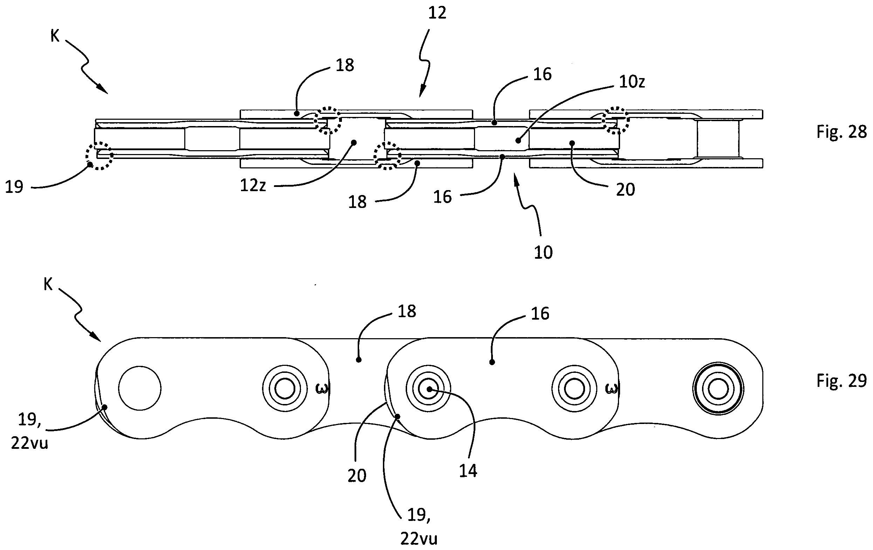

Weiterhin ist beispielsweise aus Fig. 11B in Zusammenschau mit Fig. 28/29 ersichtlich, dass eine Kette gemäß einer Ausführungsform der Erfindung insofern auch zumindest teilweise symmetrisch ausgebildet sein kann, als nicht nur die linke (inboardseitige) Innenlasche, sondern beide Innenlaschen jedes Innenlaschen-Kettenglieds im Bereich jeweils eines unteren Längsüberstands (vgl. Fig. 3/6) der Innenlasche (bei d und bei f in Fig. 11A/B) eine reduzierte Außenkontur gemäß der Erfindung aufweisen können.

Eine dergestalt teilweise symmetrische Ausbildung der Kette kann gewählt werden, um die Kette in zwei entgegengesetzte Laufrichtungen aufziehen bzw. verwenden zu können. Die erfindungsgemäßen Vorteile werden jedoch prinzipiell auch bereits mit einer Kette erreicht, bei der nur der untere Längsüberstand (vgl. Fig. 3) der linken Ketten-Innenlasche (bei d in Fig. 11A/B) eine reduzierte Außenkontur aufweist (vgl. Fig. 25), während die drei verbleibenden unteren Längsüberstände (bei e, f und g in Fig. 11A/B) der beiden Ketten-Innenlaschen eine unveränderte Außenkontur gemäß Stand der Technik aufweisen können (vgl. Fig. 3 bis 5).

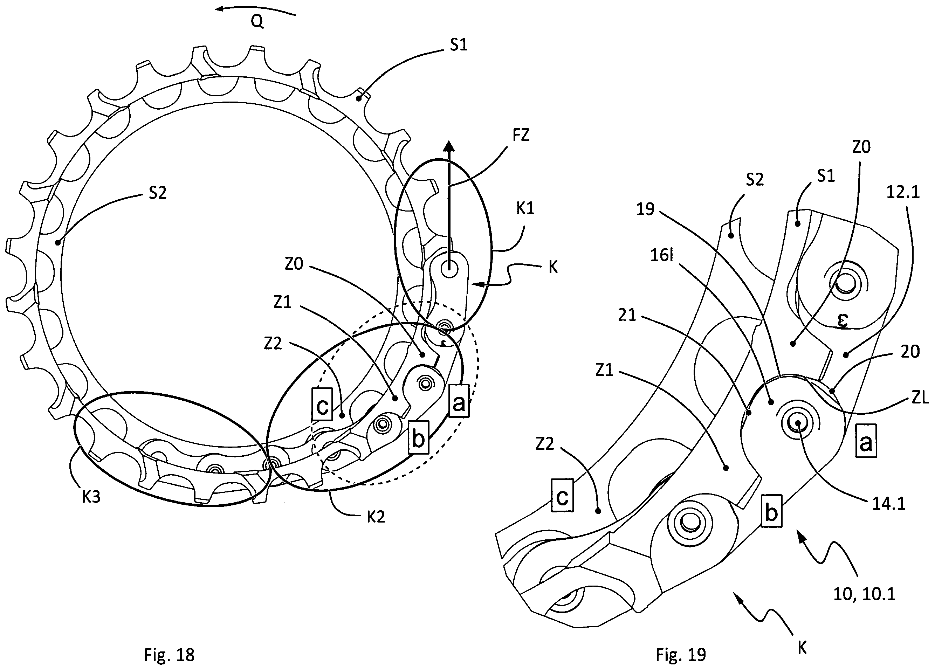

Ebenfalls ist es möglich, dass sämtliche vier unteren Längsüberstände (bei d, e, f und g in Fig. 11A/B) der beiden Ketteninnenlaschen eine reduzierte Außenkontur gemäß der Erfindung erhalten, beispielsweise aus produktionstechnischen, belastungsoptimierenden oder designerischen Gründen. In diesem Fall kommen zwei der Bereiche mit reduzierter Außenkontur (bei e und bei f in Fig. 11A/B) nicht zur erfindungsgemäßen Wirkung wie oben beschrieben und wie insbesondere in Fig. 19 und 25 ersichtlich, da diese beiden Außenkontur-Bereiche e und g der Innenlaschen - beim Schalten am Hinterrad bzw. auf einer Fahrrad-Ritzelkassette - nie direkt gegenüber der Lastflanke des letzten austretenden Ritzelzahns des größeren Ritzels zur Position gelangen.

Insbesondere bei einer nicht oben/unten-asymmetrischen Kette (nicht abgebildet) ist es auch denkbar, außer bei d und f auch bei i und k, oder auch in sämtlichen acht Bereichen d-k gemäß Fig. 11A eine reduzierte Innenlaschen-Außenkontur vorzusehen (wobei "k" in der Darstellung von Fig. 11 A teilweise verdeckt ist). In beiden Fällen wird der erfindungsgemäße Vorteil unabhängig von sämtlichen möglichen Montagerichtungen der Kette erreicht.

Die Erfindung wird im Folgenden anhand von in den Figuren gezeigten exemplarischen, nur als nicht beschränkende Beispiele dienenden Ausführungsformen näher erläutert.

Es zeigt:
Fig. 1: ein exemplarisches Fahrrad mit einer erfindungsgemäßen Fahrradkette in einer Seitenansicht von rechts.
Fig. 2A/2B: den lastfreien Eingriff einer Fahrradkette, hier mit oben/untenasymmetrischen Kettenlaschen in ein Ritzel eines Mehrfach-Ritzelpakets am Hinterrad eines Fahrrads in einer Draufsicht sowie in einer Seitenansicht von rechts (obwohl hier eine Kette nach einem Ausführungsbeispiel der Erfindung dargestellt ist, gelten Fig. 2A/2B in derselben Weise auch für den Stand der Technik);
Fig. 3 bis 5: eine Innenlasche eines Innenlaschen-Kettenglieds einer Fahrradkette gemäß Stand der Technik in drei Hauptansichten;
Fig. 6 bis 8: eine Innenlasche eines Innenlaschen-Kettenglieds einer Fahrradkette nach einem Ausführungsbeispiel der Erfindung in den drei Ansichten gemäß Fig. 3 bis 5;
Fig. 9: die Innenlasche gemäß Fig. 3 bis 5 in perspektivischer Ansicht;
Fig. 10: die Innenlasche gemäß Fig. 6 bis 8 in Fig. 9 entsprechender Ansicht;
Fig. 11A/11B: ein Innenlaschen-Kettenglied einer Fahrradkette nach einem Ausführungsbeispiel der Erfindung in zwei perspektivischen Ansichten;
Fig. 12/13: den Eingriff einer Fahrradkette gemäß Stand der Technik unter Last in ein Ritzel in einer Seitenansicht von links, sowie eine vergrößerte Ausschnittsdarstellung gemäß der strichlierten Markierung in Fig. 12;
Fig. 14/15: die Situation gemäß Fig. 12/13 mit einer Fahrradkette nach einem Ausführungsbeispiel der Erfindung;
Fig. 16/17: den Eingriff einer Fahrradkette gemäß Stand der Technik während des Outboard-Schaltens unter Last, in ein Ritzelpaar eines Mehrfach-Ritzelpakets in einer Seitenansicht von links, sowie eine vergrößerte Ausschnittsdarstellung gemäß der strichlierten Markierung in Fig. 16;
Fig. 18/19: die Situation gemäß Fig. 16/17 mit einer Fahrradkette nach einem Ausführungsbeispiel der Erfindung;
Fig. 20 bis 22: die Situation gemäß Fig. 16/17 mit einer Fahrradkette nach dem Stand der Technik in einer Ansicht von hinten (Fig. 20) sowie in weiteren Ansichten;
Fig. 23 bis 25: die Situation gemäß Fig. 18/19 mit einer Fahrradkette nach einem Ausführungsbeispiel der Erfindung in weiteren, Fig. 20 bis 22 entsprechenden Ansichten;
Fig. 26/27: vier Glieder einer Fahrradkette nach dem Stand der Technik in Draufsicht und Seitenansicht;
Fig. 28/29: vier Glieder einer Fahrradkette gemäß einem Ausführungsbeispiel der Erfindung in Draufsicht und Seitenansicht;
Fig. 30/31: den Eingriff einer Fahrradkette gemäß Stand der Technik unter Last in ein Ritzel in einer Seitenansicht von links, sowie eine vergrößerte Ausschnittsdarstellung gemäß der strichlierten Markierung in Fig. 30; und
Fig. 32/33: die Situation gemäß Fig. 30/31 mit einer Fahrradkette nach einem Ausführungsbeispiel der Erfindung sowie mit modifizierten linksseitigen Zahnflanken an dem Ritzel.

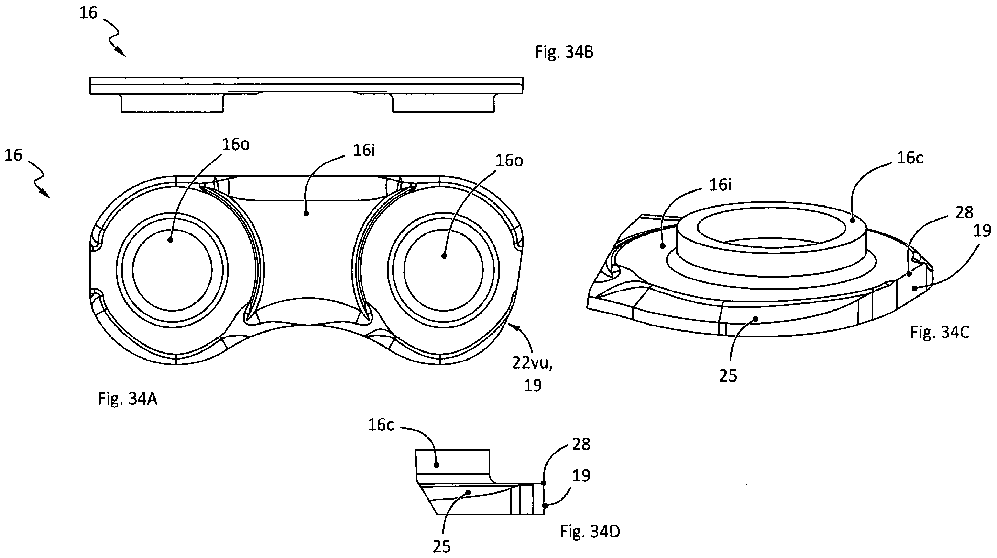

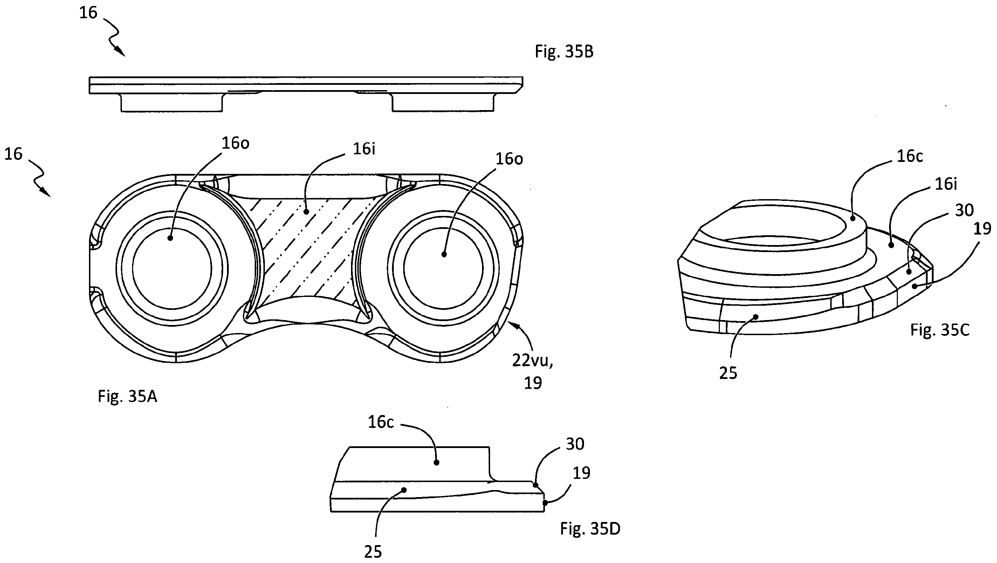

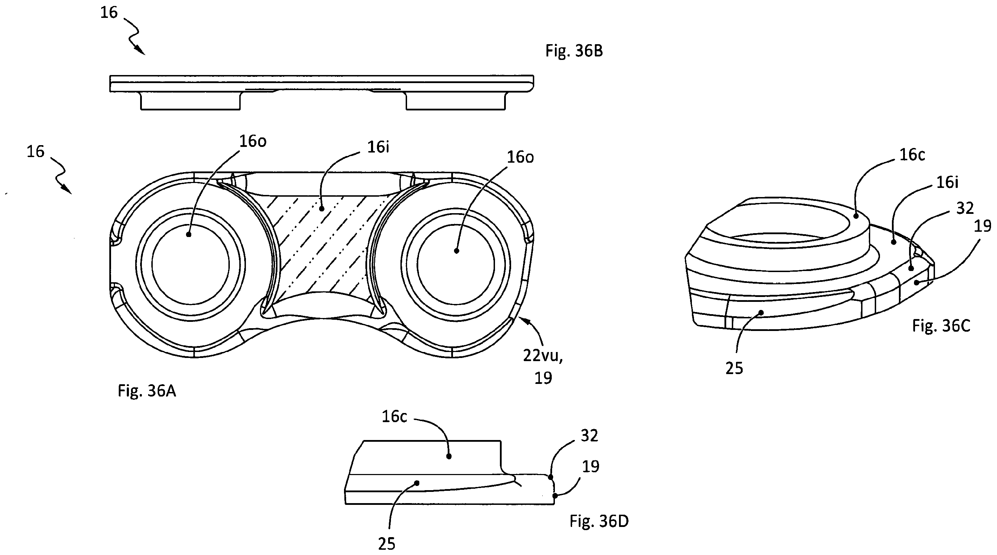

Fig. 34-36: drei weitere Ausführungsbeispiele einer erfindungsgemäßen Innenlasche jeweils in verschiedenen Ansichten bzw. Teilansichten in den jeweiligen Teilabbildungen A bis D.

Die Figuren 3-5, 9, 12, 13, 16, 17, 20-22, 26, 27, 30 und 31 stellen jeweils Beispiele gemäß dem Stand der Technik dar, die Figuren 1, 2A, 2B, 6-8, 10, 11A, 11B, 14, 15, 18, 19, 23-25, 28, 29, 32 und 33 sowie 34 bis 36 Ausführungsbeispiele der Erfindung, wobei gleiche oder entsprechende Merkmale in allen Fällen mit den gleichen Bezugszeichen versehen sind. Die Ausführungsbeispiele der Erfindung werden in erster Linie insoweit beschrieben, als sie sich vom Stand der Technik unterscheiden, auf dessen Beschreibung ansonsten verwiesen wird.

Um die Figuren nicht zu überfrachten sind nicht in jeder Figur alle Merkmale mit Bezugszeichen versehen, sondern in erster Linie nur diejenigen Merkmale, die zur Erläuterung der jeweiligen Figur benötigt werden.

Figur 1 zeigt exemplarisch ein Fahrrad B mit einem Antriebsanordnung D gemäß einem Ausführungsbeispiel der Erfindung. Die Antriebsanordnung D umfasst ein vorderes Kettenrad CR, ein hinteres Ritzelpaket R mit mehreren Ritzeln S und eine Kette K, die mittels des hinteren Umwerfers RD von einem Ritzel S zum nächsten bewegt werden kann.

Die im Folgenden verwendeten Richtungsangaben rechts/links und vorne/hinten beziehen sich auf ein Fahrrad B in Fahrtrichtung, entsprechen also der Fahrerperspektive auf dem Fahrrad B.

Der Fahrradrahmen F hat typischerweise ein linkes und ein rechtes hinteres Ausfallende oder Rahmenauge, zwischen denen das Hinterrad RW montiert ist. Das Hinterrad RW dreht sich zusammen mit dem Ritzelpaket R um die Hinterradachse A. Der Begriff axial bezieht sich hier auf die Hinterradachse A bzw. die Drehachse A des Ritzelpakets R oder eine hierzu parallele Richtung, die in Fig. 1 senkrecht zur Zeichenebene verläuft.

Der Durchmesser der Ritzel S nimmt axial nach außen ab, d.h. das größte Ritzel ist axial weiter innen bzw. "inboard" oder gemäß den vorstehenden Erläuterungen zu Richtungsangaben weiter links angeordnet als die kleineren Ritzel. Entsprechend beschreibt der Begriff "Outboard-Schalten" einen Schaltvorgang, bei dem die Kette von einem größeren zu einem benachbarten kleineren Ritzel, beim Schalten am Hinterrad also axial nach außen bzw. nach rechts umgelegt wird. Die vorstehenden Erläuterungen beziehen sich auf ein Fahrrad sowohl mit einer bekannten wie auch mit einer erfindungsgemäßen Antriebsanordnung.

Die Figuren 2A und 2B zeigen in einer Draufsicht von oben bzw. in einer Seitenansicht von rechts ein größeres Ritzel S1 und ein outboardseitig benachbartes kleineres Ritzel S2 des Ritzelpakets R, sowie einen Teil der Kette K gemäß einem Ausführungsbeispiel der Erfindung, der mit dem größeren Ritzel S1 vorliegend lastfrei in Eingriff steht.

Wie die Figuren zeigen, umfasst die Kette K abwechselnd angeordnete Innenlaschen-Kettenglieder 10 und Außenlaschen-Kettenglieder 12, die durch Kettenbolzen 14 schwenkbar miteinander verbunden sind.

Die Innenlaschen-Kettenglieder 10 umfassen jeweils zwei einander in axialer Richtung spiegelbildlich gegenüber angeordnete Innenlaschen 16, die Außenlaschen-Kettenglieder 12 jeweils zwei einander in axialer Richtung spiegelbildlich gegenüber angeordnete Außenlaschen 18.

Ein Abschnitt der Kette K gemäß Stand der Technik bzw. Ausführungsbeispiel der Erfindung ist jeweils in einer Draufsicht und einer Seitenansicht in den Figuren 26 und 27 bzw. 28 und 29 nochmals separat dargestellt, wobei in den Seitenansichten der Figuren 27 und 29 die dem Betrachter zugewandten Außenlaschen weggelassen wurden.

Wenn die Kette K in Eingriff mit einem Ritzel steht, wie in Fig. 2 mit dem größeren Ritzel S1, dann greifen die Ritzelzähne Z in die Zwischenräume 10z bzw. 12z zwischen den Innenlaschen 16 bzw. zwischen den Außenlaschen 18 ein (vgl. auch Fig. 26).

Um den Eingriff der Ritzelzähne Z zumindest in die Zwischenräume 12z zwischen den Außenlaschen 16 zeigen zu können, sind in der Darstellung von Fig. 2B die rechten bzw. outboardseitigen Außenlaschen 16 weggelassen.

Da die Innenlaschen 16 näher zusammenstehen als die Außenlaschen 18, findet ein seitlich führender Kontakt zwischen den Ritzelzähnen Z und der Kette K hauptsächlich im Bereich der Innenlaschen 16 statt.

Die in den Figuren 3 bis 5 sowie 9 für den Stand der Technik und in den Figuren 6 bis 8 und 10 für das Ausführungsbeispiel der Erfindung einzeln in verschiedenen Ansichten dargestellten Innenlaschen 16 weisen jeweils eine längliche Form auf und verfügen in Längsrichtung L jeweils über zwei gegenüberliegende Längsendbereiche 22 mit üblicherweise abgerundeter Außenkontur, wobei die Endbereiche über einen Verbindungsbereich 23 mit zumindest am unteren Rand meistens taillierter Außenkontur verbunden sind (vgl. Fig. 3 bis 5). Die gesamte Innenlaschen-Außenperipherie bzw. Außenkontur wird hier mit 21 bezeichnet.

Wie einleitend erläutert, beziehen sich die Angaben "oben" und "unten" dabei auf das obere Trum der Fahrradkette K im montierten Zustand am Fahrrad.

In den Endbereichen der Innenlaschen 16 sind Lochungen 16o üblicherweise konzentrisch zur abgerundeten Außenkontur vorgesehen. Die Kettenbolzen 14 sind in die Lochungen 18o in den Außenlaschen 18 eingepresst (vgl. Fig. 27), während zwischen den Lochungen 16o in den Innenlaschen 16 und den Kettenbolzen 14 jeweils ausreichend Spiel vorhanden ist, um die Drehbeweglichkeit zwischen den Kettengliedern 10, 12 zu gewährleisten.

Die Innenlaschen 16 weisen an ihrer Innenseite 16i im Bereich der Lochungen 16o üblicherweise Kragen 16c auf (vgl. Fig. 9), wobei auf einem Paar spiegelbildlich zueinander angeordneter Kragen 16c (und damit auch über dem Kettenbolzen 14) jeweils eine Kettenrolle 20 drehbar angeordnet ist (vgl. Fig. 11A/B). Die zylindrische Innenfläche 26 der Kragen 16c bildet dabei eine Anlagefläche für die Kettenbolzen 14, die zylindrische Außenfläche 28 der Kragen 16c bildet eine Anlagefläche für die Kettenrollen 20.

Um das möglichst ruckfreie Eintreten der Ritzelzähne Z in die Zwischenräume 10z zwischen den Innenlaschen 16 zu erleichtern, sind an deren Innenseiten 16i über zumindest einen Teil des Außenumfangs Fasen 25 vorgesehen, die insbesondere eine Art Einlauftrichter für die Ritzelzähne bilden. Aus historischen bzw. fertigungstechnischen Gründen kann es im Bereich der Längsenden 22 jeweils einen mittleren Außenkontur-Bereich 27 ohne Fase geben, es ist jedoch auch denkbar und vorgesehen, die Fase an diesen Stellen durchgängig zu gestalten.

Die aus dem Stand der Technik bekannten Innenlaschen der Figuren 3 bis 5 und 9 sind im Wesentlichen spiegelsymmetrisch bezüglich einer senkrecht zu einer Längsrichtung L der Laschen verlaufenden Mittelebene E aufgebaut, die in Fig. 3 angedeutet ist und dort senkrecht zur Zeichenebene verläuft.

Gegenüber den an den Kragen 16c vorzusehenden Kettenrollen, die in den Figuren 3 bis 5 nicht dargestellt sind, weisen die Innenlaschen sowohl einen Längsüberstand (bei 22) als auch einen Querüberstand (bei 24) auf, also einen Überstand gegenüber der Kettenrolle in Längs- bzw. in Querrichtung. Wie insbesondere Figur 3 veranschaulicht, sind im Stand der Technik die Innenlaschen insofern symmetrisch ausgebildet, dass ein vorderer und ein hinteren Längsüberstand (also ein Überstand im vorderen und hinteren Längsendbereich 22h, 22v gegenüber der vorderen bzw. hinteren Kettenrolle 20) im Wesentlichen gleich ist. Jeder der Längsüberstände lässt sich weiter in einen oberen und einen unteren Längsüberstand aufteilen (einen Überstand im oberen und unteren Teil 22o, 22u des Längsendbereichs 22), die ebenfalls im Wesentlichen gleich sind.

Insgesamt weist die bekannte Innenlasche 16 also im vorderen oberen Längsendbereich 22vo, im vorderen unteren Längsendbereich 22vu, im hinteren oberen Längsendbereich 22ho sowie im hinteren oberen Längsendbereich 22hu jeweils einen (Längs-)Überstand gegenüber der zugehörigen Kettenrolle auf, die im Wesentlichen symmetrisch zueinander ausgebildet sind. (vgl. Fig. 9). Die Bereiche der Innenlasche 16, in denen ein Querüberstand vorliegt, sind mit 24 markiert.

Bei den erfindungsgemäßen Innenlaschen 16 der Figuren 6 bis 8 und 10 ist diese Symmetrie dadurch gebrochen, dass in einem bestimmten, in den Figuren 8 und 10 jeweils durch ein gestricheltes Oval angedeuteten Bereich 19 der Innenlaschen-Außenperipherie 21 die radiale Ausdehnung der Innenlasche reduziert ist, so dass entsprechend auch der Überstand der Innenlasche 16 gegenüber der in diesen Figuren nicht dargestellten Kettenrolle reduziert ist. Bereichsweise ist der Überstand sogar negativ, so dass in einer Seitenansicht die Kettenrollen 20 teilweise über die Innenlaschen 16 herausragen, wie beispielsweise in Fig. 15 zu erkennen ist.

Bei dem Ausführungsbeispiel der Figuren 6 bis 8 und 10 liegt ein reduzierter Überstand in einem vorderen unteren Längsendbereich 22vu vor, der im Vergleich zum Überstand im vorderen oberen Längsendbereich 22vo im hinteren unteren Längsendbereich 22hu und im hinteren oberen Längsendbereich 22ho reduziert ist (vgl. Fig. 10).

Deutlich gehen Größe und Umfang des reduzierten Überstands des vorgenannten Ausführungsbeispiels insbesondere aus Figuren 6 und 8 hervor, in denen jeweils mittels punktierter Linie zusätzlich der Verlauf der Außenkontur 21 einer konventionell ausgeführten Ketteninnenlasche gemäß dem Stand der Technik (vgl. Figuren 3 und 5) eingezeichnet ist.

Ein Ausführungsbeispiel eines Innenlaschen-Kettenglieds 10, das zwei Innenlaschen 16 gemäß der Figuren 6 bis 8 und 10 umfasst, und das in zwei perspektivischen Ansichten in Fig. 11A und Fig. 11B dargestellt ist, weist somit nur im vorderen unteren Längsendbereich 22vu der inboardseitigen Kettenlasche 16l sowie im hinteren unteren Längsendbereich 22hu der outboardseitigen Kettenlasche 16r einen reduzierten Längsüberstand auf, also nur bei "f" und "d", wie am besten in Fig. 11B zu erkennen ist.

Die Figuren 12 und 13 illustrieren die Führungsfunktion des Längs- und Querüberstands bei 22 und 24 der Innenlaschen 16 beim Eingriff der aus dem Stand der Technik bekannten Kette K in ein Ritzel S unter Last, wenn also eine Zugkraft FZ auf die Kette wirkt, die Figuren 14 und 15 illustrieren die gleiche Situation für eine erfindungsgemäße Kette K. Um den Eingriff der Innenlaschenglieder mit den Ketteninnenlaschen 16 an den Lastflanken ZL der Ritzelzähne Z erkennen zu können, sind in den Figuren 12 bis 15 die meisten der zeichnungsbezogen vorne liegenden Kettenlaschen 18 darstellungshalber weggelassen.

Der Bereich 19 der Innenlaschen-Außenperipherie 21 mit reduziertem oder negativen Längsüberstand ist erfindungsgemäß so gewählt, dass die beim Stand der Technik vorhandenen Schaltprobleme beim Outboard-Schalten reduziert bzw. eliminiert werden, wie bereits einleitend unter Verweis auf die Figuren 16 bis 25 genauer erläutert wurde, wobei die Figuren 16 bis 17 und 20 bis 22 das Outboard-Schalten im Stand der Technik illustrieren, die Figuren 18 und 19 sowie 23 bis 25 das Outboard-Schalten für ein Ausführungsbeispiel der vorliegenden Erfindung.

Fig. 17 bzw. 19 ist dabei eine Ausschnittvergrößerung des in Figur 16 bzw. 18 mit einem gestrichelten Oval markierten Bereichs. Fig. 22 bzw. 25 ist eine Ausschnittvergrößerung des in Fig. 20 bzw. 23 mit einem gestrichelten Kreis markierten Bereichs und Fig. 21 bzw. 24 ist eine vergrößerte Seitenansicht von links des in der Ansicht von hinten in Fig. 20 bzw. 23 mit einem gestrichelten Rechteck markierten Bereichs. In den Figuren 21 und 24 sind die Kettenrollen weggelassen, in Figur 24 zusätzlich die inboardseitige Außenlasche des letzten noch in Eingriff mit dem größeren Ritzel stehenden Kettenglieds.

Wie am besten in Fig. 17 bzw. 19 zu sehen ist, passiert beim Outboard-Schalten zunächst ein bestimmtes Innenlaschen-Kettenglied 10.1 einen bestimmten Zahn Z1 des größeren Ritzels S1 auf dessen dem kleineren Ritzel S2 zugewandten (outboardseitigen) Seite, vgl. auch Fig. 20/21 und Fig. 23/24.

Ein in Ritzel-Drehrichtung Q nachfolgender Zahn Z2 des kleineren Ritzels S2 taucht dann in den Laschenzwischenraum eines Kettenglieds des überlaufenden Kettenabschnitts K2 ein (bei "c" in Fig. 16 bis 25).

Dieser Vorgang ist verbunden mit einem Abknicken des überlaufenden Kettenabschnitts K2 nach radial innen um einen bestimmten Kettenbolzen 14.1 des entgegen der Drehrichtung letzten noch im Eingriff mit dem größeren Ritzel S1 stehenden Außenlaschen-Kettenglieds 12.1 (bei "a" in Fig. 16 bis 25). Es wird darauf hingewiesen, dass aus Gründen der besseren Darstellbarkeit die linke bzw. inboardseitige Außenlasche des Außenlaschen-Kettenglieds 12.1 (bei "a") in den Figuren 16-19 weggelassen wurde.

Die Abknickbewegung der Kette K während des Umlegens auf das kleinere Kettenrad S2 ist somit verknüpft mit einer Verdrehung des zugehörigen Innenlaschen-Gliedes 10.1 (bei "b" in Fig. 16 bis 25) um den Kettenbolzen 14.1 gegenüber dem vorangehenden Außenlaschen-Kettenglied 12.1, das noch im Eingriff am größeren Kettenrad S1 ist (bei "a" in Fig. 16 bis 25), sowie mit einer dementsprechenden Bewegung der Peripherie der abgerundeten Außenkontur der linken (inboardseitigen) abknickenden Innenlasche 16l relativ gegenüber der angrenzenden Zahn-Lastflanke ZL (vgl. Fig. 17, 19 und 24).

Liegt die Außenkontur 21 der abknickenden linken Innenlasche 16l dabei an der angrenzenden Zahn-Lastflanke ZL an, was beim Stand der Technik der Fall ist (vgl. Fig. 17), so kommt es an dieser Stelle - anders als bei einem Kontakt zwischen Kettenrolle und Zahn des Kettenrades, bei dem ein reibungsarmer Abrollvorgang der Kettenrolle an der Flanke des Zahnes erfolgt - zu einer pressenden bzw. gleitenden Reibung, die die schwenkende Bewegung des abknickenden Innenlaschen-Kettenglieds 10.1, und somit den Umschaltvorgang sowie die Einhaltung der weiter oben beschriebenen Tangentialbedingung, behindert.

Zusätzlich zu der im Stand der Technik an dieser Stelle entstehenden Reibung zwischen der Außenkontur 21 der abknickenden linken Innenlasche 16l und der Zahn-Lastflanke ZL kann es je nach Geometrie der Lastflanke ZL des dortigen, aus dem auslaufenden Kettenabschnitt K1 zuletzt austretenden Ritzelzahns Z0 des größeren Ritzels S1 auch zur Ausbildung eines Drehmoments "M" kommen (vgl. Fig. 17), welches sich aus der auf die Innenlasche 10.1 wirkenden Kettenzugkraft X einerseits und aus der hierzu (je nach Geometrie der Lastflanke ZL und der Kettenlaschen-Außenkontur 21) exzentrischen, von der Lastflanke ZL auf die Außenkontur 21 der Innenlasche 10.1 übertragenen Gegenkraft Y bilden kann.

Dieses Drehmoment M versucht somit, das abknickende Kettenglied 10.1 (bei "b" in Fig. 17) am Abknicken zu hindern und den überlaufenden Kettenabschnitt K2 stattdessen zu strecken.

Ein weiterer Effekt der mit der Lastflanke ZL des zuletzt austretenden Ritzelzahns Z0 beim Stand der Technik kollidierenden vorderen Peripherie 21 der linken Innenlasche 16l des abknickenden Innenlaschen-Kettenglieds (vgl. Fig. 17, 20 und 22) liegt darin, dass hierdurch nicht nur die erwünschte reibungslose Abknickbewegung dieses Innenlaschen-Kettenglieds gestört wird, sondern auch die bereits vor dieser Abknickbewegung beginnende seitliche Verlagerung des überlaufenden Kettenabschnitts (vgl. Fig. 20/22) durch das Schaltwerk RD, durch welche das Outboard-Schalten eingeleitet wird. Die Kollision zwischen dem vorderen Längsendbereich 22v der Außenkontur 21 der inboardseitigen Innenlasche 16l und dem zuletzt austretenden Ritzelzahn Z0 für eine Kette K gemäß dem Stand der Technik ist besonders gut in Fig. 22 zu erkennen.

Diese im Kontaktbereich zwischen der Außenperipherie 21 der Innenlasche 16l des abknickenden Kettenglieds "b" mit dem zuletzt austretenden Ritzelzahn Z0 des größeren Ritzels S1 auftretenden Reibungskräfte und Reaktionsmomente M sind insbesondere dann kritisch, wenn, was wie oben beschrieben wünschenswert ist, die Tangentialbedingung beim Outboard-Schalten erfüllt werden soll, wenn also der zwischen den Ritzeln überlaufende Kettenabschnitt K2 (vgl. Fig. 16 und 20) eine theoretische Tangente T an das kleinere Kettenrad S2, ausgehend von dem bereits in das kleinere Kettenrad S2 eingreifenden, einlaufenden KettenabschnittK3 hin zu dem noch im Eingriff mit dem größeren Ritzel S1 stehenden, auslaufenden Kettenabschnitt K1 möglichst eng abbilden soll (vgl. Fig. 16).

Diese vorstehend erläuterte Problematik wird erfindungsgemäß dadurch überwunden, dass die Außenkontur 21 der inboardseitigen Innenlaschen 16l zumindest genau in dem Bereich 19 zurückgenommen wird, in dem es im Stand der Technik beim Outboard-Schalten zur Kollision bzw. Reibung mit der Lastflanke ZL des zuletzt austretenden Ritzelzahns Z0 kommen würde, wie insbesondere aus dem vorstehend beschriebenen Vergleich des in den Figuren 14, 15, 18, 19, 23-25, 28, 29 und 32-33 dargestellten Ausführungsbeispiels der Erfindung mit den entsprechenden Darstellungen zum Stand der Technik in den Figuren 12, 13, 16, 17, 20 bis 22, 26, 27, 30 und 31 hervorgeht.

Aus Figur 23 geht ferner das Zusammenwirken zwischen der Fahrradkette und Ritzeln mit alternierend dicken (breiten) Zähnen Zb und dünnen (schmalen) Zähnen Zs insbesondere beim Schaltvorgang hervor. Derartige Ritzel sind besonders vorteilhaft aufgrund der damit möglichen, verbesserten Einhaltung des vorgesehenen Kettenwegs, insbesondere der Tangentialbedingung, beim Schaltübergang zwischen benachbarten Ritzeln (vgl. weiter oben unter "Bedingungen für das Schalten auf das größere Ritzel", sowie die Beschreibung der Tangentialbedingung weiter oben bei "Ablauf des Outboard-Schaltens").

Auch bestehen beim Einsatz von Frontkettenrädern mit derartigen, alternierend dicken (breiten) Zähnen Zb und dünnen (schmalen) Zähnen Zs reduzierte Anforderungen an den Innenlaschen-Überstand 22, 24 zum Zweck der Führung der Kette auf den Zähnen der Kettenräder (vgl. Fig. 13 sowie oben unter "Erörterung des Innenlaschenüberstandes"). Wie bereits in der Beschreibungseinleitung erwähnt, eignet sich die erfindungsgemäße Kette aus diesen Gründen besonders zum Einsatz zusammen mit Ritzeln und Kettenrädern mit alternierend breiten Zähnen Zb und schmalen Zähnen Zs.

Ein Abschnitt einer mit Innenlaschen-Kettengliedern 10 gemäß Fig. 11 aufgebauten Kette K ist separat nochmals in den Figuren 28 und 29 dargestellt, wobei in Fig. 28 die Bereiche 19 mit reduzierter Außenkontur jeweils durch einen gestrichelten Kreis markiert sind.

Wie in den Figuren 30 bis 33 illustriert, können zudem bei Verwendung einer erfindungsgemäßen Kette, aufgrund des erfindungsgemäß partiell reduzierten Innenlaschen-Längsüberstands, im Stand der Technik auf der linken Seite der Ritzel S zur Aufnahme des Innenlaschen-Längsüberstands vorgesehene Ausnehmungen bzw. Ausfräsungen ZA (vgl. Fig. 30/31) reduziert werden oder sogar ganz entfallen, wie in den Fig. 32/33 dargestellt ist. Hierdurch vergrößert sich die wirksame Breite der Zahn-Lastflanke ZL, was die Kraftübertragung zwischen der Kette K und dem Ritzel S verbessert und insbesondere die Lebensdauer des Ritzels S erhöht.

Die Figuren 34 bis 36 schließlich illustrieren verschiedene Möglichkeiten, bei einer erfindungsgemäßen Innenlasche 16 den Übergang zwischen dem Bereich 19 der Innenlaschen-Außenperipherie 21 mit reduziertem Längsüberstand 22 und der meist planen Innenseite 16i der Innenlasche 16 bzw. der angrenzenden Fase 25 zu gestalten, nämlich als einfache Kante 28 (vgl. Figur 34) als weitere Fase 30 oder als abgerundete Kante 32. Die beiden letztgenannten Möglichkeiten reduzieren weiter die Wahrscheinlichkeit, dass es bei Outboard-Schaltvorgängen zu den eingangs beschriebenen Störungen kommt.

## Patentansprüche

1. Fahrradkette (K) mit einer Innenlasche (16) und Kettenrollen (20), wobei ein Überstand der Innenlasche (16) gegenüber der jeweils zugeordneten Kettenrolle (20) in einem vorderen unteren Längsendbereich (22vu) einer Innenlaschen-Außenperipherie (21) im Vergleich zum Überstand in einem vorderen oberen Längsendbereich (22vo) oder/und in einem hinteren unteren Längsendbereich (22hu) der Innenlaschen-Außenperipherie (21) reduziert und zumindest bereichsweise negativ ist.

2. Fahrradkette (K) nach Anspruch 1, wobei der Überstand der Innenlasche (16) gegenüber der jeweils zugeordneten Kettenrolle (20) weiter auch in einem hinteren oberen (22ho) Längsendbereich der Innenlaschen-Außenperipherie (21) im Vergleich zum Überstand in einem vorderen oberen Längsendbereich (22vo) oder/und einem hinteren unteren Längsendbereich (22hu) der Innenlaschen-Außenperipherie (21) reduziert und bevorzugt zumindest bereichsweise negativ ist.

3. Fahrradkette (K) nach einem der vorhergehenden Ansprüche, wobei der Überstand der Innenlaschen-Außenperipherie (21) über die jeweils zugeordnete Kettenrolle (20) in einem Winkelbereich (α) reduziert oder negativ ist.

4. Fahrradkette (K) gemäß einem der vorhergehenden Ansprüche, mit alternierend angeordneten Innenlaschen-Kettengliedern (10) und Außenlaschen-Kettengliedern (12), die mittels Kettenbolzen (14) schwenkbar miteinander verbunden sind, wobei an jedem Kettenbolzen (14) eine Kettenrolle (20) vorgesehen ist, und wobei die Innenlaschen-Kettenglieder (10) die Innenlasche (16) als inboardseitige Innenlasche (16l) aufweisen.

5. Fahrradkette (K) nach Anspruch 4, wobei für jedes Innenlaschen-Kettenglied (10) der Überstand der inboardseitigen Innenlasche (16l) gegenüber der jeweils zugeordneten Kettenrolle (20) in einem vorderen unteren Längsendbereich (22vu) der Innenlaschen-Außenperipherie (21) im Vergleich zum Überstand in einem hinteren unteren Längsendbereich (22hu) der Innenlaschen-Außenperipherie (21) der inboardseitigen Innenlasche (16l) sowie im Vergleich zum Überstand in einem vorderen unteren Längsendbereich (22vu) und einem hinteren unteren Längsendbereich (22hu) der Innenlaschen-Außenperipherie (21) der outboardseitigen Innenlasche (16r) reduziert und bevorzugt zumindest bereichsweise negativ ist.

6. Fahrradkette (K) nach Anspruch 4, wobei für jedes Innenlaschen-Kettenglied (10) der Überstand der inboardseitigen Innenlasche (16l) gegenüber der jeweils zugeordneten Kettenrolle in einem vorderen unteren Längsendbereich (22vu) der Innenlaschen-Außenperipherie (21) der inboardseitigen Innenlasche (16l) im Vergleich zum Überstand in einem hinteren unteren Längsendbereich (22hu) reduziert und bevorzugt zumindest bereichsweise negativ ist, und wobei der Überstand der outboardseitigen Innenlasche (16r) in einem hinteren unteren Längsendbereich (22hu) der Innenlaschen-Außenperipherie (21) im Vergleich zum Überstand in einem vorderen unteren Längsendbereich (22vu) der Außenperipherie (21) der outboardseitigen Innenlasche (16r) reduziert und bevorzugt zumindest bereichsweise negativ ist.

7. Fahrradkette (K) nach Anspruch 4, wobei für jedes Innenlaschen-Kettenglied (10) der Überstand der inboardseitigen Innenlasche (16l) und der outboardseitigen Innenlasche (16r) jeweils in einem vorderen unteren Längsendbereich (22vu) und in einem hinteren unteren Längsendbereich (22hu) im Vergleich zum Überstand in einem vorderen oberen Längsendbereich (22vo) und in einem hinteren oberen Längsendbereich (22ho) reduziert und bevorzugt zumindest bereichsweise negativ ist.

8. Fahrradkette nach Anspruch 4, wobei für jedes Innenlaschen-Kettenglied (10) der Überstand der inboardseitigen Innenlasche (16l) in einem vorderen unteren Längsendbereich (22vu) sowie einem hinteren oberen Längsendbereich (22ho) der Innenlaschen-Außenperipherie (21) im Vergleich zum Überstand in einem vorderen oberen Längsendbereich (22vo) und einem hinteren unteren Längsendbereich (22hu) der Innenlaschen-Außenperipherie (21) der inboardseitigen Innenlasche (16l) reduziert und bevorzugt zumindest bereichsweise negativ ist,
und wobei der Überstand der outboardseitigen Innenlasche (16r) in einem vorderen oberen Längsendbereich (22vo) sowie einem hinteren unteren Längsendbereich (22hu) im Vergleich zu einem Überstand in einem vorderen unteren Längsendbereich (22vu) und einem hinteren oberen Längsendbereich (22ho) der Innenlaschen-Außenperipherie (21) der outboardseitigen Innenlasche (16r) reduziert und bevorzugt zumindest bereichsweise negativ ist.

9. Fahrradkette (K) nach einem der Ansprüche 4 bis 7 mit Kettenlaschen mit oben/unten-Asymmetrie.

10. Antriebsanordnung (D) für ein Fahrrad (B), mit einem größeren Ritzel (S1) und einem outboardseitig benachbarten kleineren Ritzel (S2) sowie einer Fahrradkette (K) gemäß einem der Ansprüche 4 bis 9, bei der aufgrund des bereichsweise reduzierten Längsüberstands der inboardseitigen Innenlaschen (16l) beim Outboard-Schalten zwischen den beiden Ritzeln (S1, S2) die Lastflanke (ZL) des zuletzt aus dem auslaufenden Kettenabschnitt (K1) austretenden Ritzelzahns (Z0) des größeren Ritzels (S2) nicht mit der Außenperipherie (21) der inboardseitigen Innenlasche (16l) des ersten abknickenden Innenlaschen-Kettengliedes (10.1) in Berührung kommt.

11. Antriebsanordnung (D) nach Anspruch 10, wobei beim Outboard-Schalten ein vom größeren Ritzel (S1) zum kleineren Ritzel (S2) überlaufender Kettenabschnitt (K2) eine Tangente (T) an das kleinere Ritzel (S2) bildet.

12. Fahrrad-Antriebssystem umfassend geradzahnzahlige Kettenräder mit alternierend dicken und dünnen Zähnen (Z) mit einer Fahrradkette (K) gemäß einem der Ansprüche 4 bis 9, oder mit einer Antriebsanordnung (D) gemäß Anspruch 10 oder 11.

## Claims

1. Bicycle chain (K) having an inner link plate (16) and chain rollers (20), wherein a protrusion of the inner link plate (16) in relation to the respectively assigned chain roller (20) in a front lower longitudinal end region (22vu) of an inner link plate outer periphery (21) is reduced, and is negative at least in regions, in comparison to the protrusion in a front upper longitudinal end region (22vo) or/and in a rear lower longitudinal end region (22hu) of the inner link plate outer periphery (21).

2. Bicycle chain (K) according to Claim 1, wherein the protrusion of the inner link plate (16) in relation to the respectively assigned chain roller (20) furthermore also in a rear upper (22ho) longitudinal end region of the inner link plate outer periphery (21) is reduced, and is preferably negative at least in regions, in comparison to the protrusion in a front upper longitudinal end region (22vo) or/and a rear lower longitudinal end region (22hu) of the inner link plate outer periphery (21).

3. Bicycle chain (K) according to either of the preceding claims, wherein the protrusion of the inner link plate outer periphery (21) over the respectively assigned chain roller (20) is reduced or is negative within an angular range (a).

4. Bicycle chain (K) according to one of the preceding claims, having alternatingly arranged inner link plate chain links (10) and outer link plate chain links (12), which chain links are connected pivotably to one another by means of chain pins (14), wherein a chain roller (20) is provided at each chain pin (14), and wherein the inner link plate chain links (10) have the inner link plate (16) as an inboard-side inner link plate (161).

5. Bicycle chain (K) according to Claim 4, wherein, for each inner link plate chain link (10), the protrusion of the inboard-side inner link plate (161) in relation to the respectively assigned chain roller (20) in a front lower longitudinal end region (22vu) of the inner link plate outer periphery (21) is reduced, and is preferably negative at least in regions, in comparison to the protrusion in a rear lower longitudinal end region (22hu) of the inner link plate outer periphery (21) of the inboard-side inner link plate (161) and in comparison to the protrusion in a front lower longitudinal end region (22vu) and in a rear lower longitudinal end region (22hu) of the inner link plate outer periphery (21) of the outboard-side inner link plate (16r).

6. Bicycle chain (K) according to Claim 4, wherein, for each inner link plate chain link (10), the protrusion of the inboard-side inner link plate (161) in relation to the respectively assigned chain roller in a front lower longitudinal end region (22vu) of the inner link plate outer periphery (21) of the inboard-side inner link plate (161) is reduced, and is preferably negative at least in regions, in comparison to the protrusion in a rear lower longitudinal end region (22hu), and wherein the protrusion of the outboard-side inner link plate (16r) in a rear lower longitudinal end region (22hu) of the inner link plate outer periphery (21) is reduced, and is preferably negative at least in regions, in comparison to the protrusion in a front lower longitudinal end region (22vu) of the outer periphery (21) of the outboard-side inner link plate (16r).

7. Bicycle chain (K) according to Claim 4, wherein, for each inner link plate chain link (10), the protrusion of the inboard-side inner link plate (161) and of the outboard-side inner link plate (16r) in each case in a front lower longitudinal end region (22vu) and in a rear lower longitudinal end region (22hu) is reduced, and is preferably negative at least in regions, in comparison to the protrusion in a front upper longitudinal end region (22vo) and in a rear upper longitudinal end region (22ho) .

8. Bicycle chain according to Claim 4, wherein, for each inner link plate chain link (10), the protrusion of the inboard-side inner link plate (161) in a front lower longitudinal end region (22vu) and in a rear upper longitudinal end region (22ho) of the inner link plate outer periphery (21) is reduced, and is preferably negative at least in regions, in comparison to the protrusion in a front upper longitudinal end region (22vo) and in a rear lower longitudinal end region (22hu) of the inner link plate outer periphery (21) of the inboard-side inner link plate (161),
and wherein the protrusion of the outboard-side inner link plate (16r) in a front upper longitudinal end region (22vo) and in a rear lower longitudinal end region (22hu) is reduced, and is preferably negative at least in regions, in comparison to a protrusion in a front lower longitudinal end region (22vu) and in a rear upper longitudinal end region (22ho) of the inner link plate outer periphery (21) of the outboard-side inner link plate (16r).

9. Bicycle chain (K) according to one of Claims 4 to 7 having chain link plates with asymmetry at the top/bottom.

10. Drive arrangement (D) for a bicycle (B), having a larger pinion (S1) and a smaller pinion (S2) adjacent on the outboard side, and having a bicycle chain (K) according to one of Claims 4 to 9, in which, because of the regionally reduced longitudinal protrusion of the inboard-side inner link plates (161), during the outboard shifting between the two pinions (S1, S2) the load flank (ZL) of the last pinion tooth (Z0) of the larger pinion (S2) to emerge from the outgoing chain portion (K1) does not come into contact with the outer periphery (21) of the inboard-side inner link plate (161) of the first bending inner link plate chain link (10.1).

11. Drive arrangement (D) according to Claim 10, wherein, during the outboard shifting, a chain portion (K2) running over from the larger pinion (S1) to the smaller pinion (S2) forms a tangent (T) to the smaller pinion (S2).

12. Bicycle drive system comprising chain wheels with an even number of teeth and with alternatingly thick and thin teeth (Z), having a bicycle chain (K) according to one of Claims 4 to 9, or having a drive arrangement (D) according to Claim 10 or 11.

## Revendications

1. Chaîne (K) de bicyclette avec une plaque intérieure (16) et des rouleaux (20) de chaîne, un débord de la plaque intérieure (16) par rapport au rouleau (20) de chaîne respectivement associé étant réduit dans une zone d'extrémité longitudinale inférieure avant (22vu) d'une périphérie extérieure (21) de plaque intérieure en comparaison avec le débord dans une zone d'extrémité longitudinale supérieure avant (22vo) et/ou dans une zone d'extrémité longitudinale inférieure arrière (22hu) de la périphérie extérieure (21) de plaque intérieure et étant négatif au moins par endroits.

2. Chaîne (K) de bicyclette selon la revendication 1, le débord de la plaque intérieure (16) par rapport au rouleau (20) de chaîne associé étant par ailleurs également réduit dans une zone d'extrémité longitudinale supérieure arrière (22ho) de la périphérie extérieure (21) de plaque intérieure en comparaison avec le débord dans une zone d'extrémité longitudinale supérieure avant (22vo) et/ou une zone d'extrémité longitudinale inférieure arrière (22hu) de la périphérie extérieure (21) de plaque intérieure et étant de manière préférée négatif au moins par endroits.

3. Chaîne (K) de bicyclette selon l'une des revendications précédentes, le débord de la périphérie extérieure (21) de plaque intérieure au-delà du rouleau (20) de chaîne respectivement associé étant réduit ou négatif dans une plage angulaire (a).

4. Chaîne (K) de bicyclette selon l'une des revendications précédentes, avec des maillons de chaîne de plaque intérieure (10) et des maillons de chaîne de plaque extérieure (12) disposés en alternance, qui sont reliés entre eux de manière à pouvoir pivoter au moyen d'axes (14) de chaîne, un rouleau (20) de chaîne étant prévu sur chaque axe (14) de chaîne, et les maillons de chaîne de plaque intérieure (10) comportant la plaque intérieure (16) en tant que plaque intérieure côté intérieur (16l).

5. Chaîne (K) de bicyclette selon la revendication 4, le débord de la plaque intérieure côté intérieur (16l) par rapport au rouleau (20) de chaîne respectivement associé étant réduit dans une zone d'extrémité longitudinale inférieure avant (22vu) de la périphérie extérieure (21) de plaque intérieure en comparaison avec le débord dans une zone d'extrémité longitudinale inférieure arrière (22hu) de la périphérie extérieure (21) de plaque intérieure de la plaque intérieure côté intérieur (161) ainsi qu'en comparaison avec le débord dans une zone d'extrémité longitudinale inférieure avant (22vu) et une zone d'extrémité longitudinale inférieure arrière (22hu) de la périphérie extérieure (21) de plaque intérieure de la plaque intérieure côté extérieur (16r) et étant de manière préférée négatif au moins par endroits pour chaque maillon de chaîne de plaque intérieure (10).

6. Chaîne (K) de bicyclette selon la revendication 4, le débord du maillon intérieur côté intérieur (161) par rapport au rouleau de chaîne respectivement associé étant réduit dans une zone d'extrémité longitudinale inférieure avant (22vu) de la périphérie extérieure (21) de plaque intérieure de la plaque intérieure côté intérieur (161) en comparaison avec le débord dans une zone d'extrémité longitudinale inférieure arrière (22hu) et étant de manière préférée négatif au moins par endroits pour chaque maillon de chaîne de plaque intérieure (10), et le débord de la plaque intérieure côté extérieur (16r) étant réduit dans une zone d'extrémité longitudinale inférieure arrière (22hu) de la périphérie extérieure (21) de plaque intérieure en comparaison avec le débord dans une zone d'extrémité longitudinale inférieure avant (22vu) de la périphérie extérieure (21) de la plaque intérieure côté extérieur (16r) et étant de manière préférée négatif au moins par endroits.

7. Chaîne (K) de bicyclette selon la revendication 4, le débord du maillon intérieur côté intérieur (16l) et de la plaque intérieure côté extérieur (16r) étant réduit respectivement dans une zone d'extrémité longitudinale inférieure avant (22vu) et dans une zone d'extrémité longitudinale inférieure arrière (22hu) en comparaison avec le débord dans une zone d'extrémité longitudinale supérieure avant (22vo) et dans une zone d'extrémité longitudinale supérieure arrière (22ho) et étant négatif de manière préférée au moins par endroits pour chaque maillon de chaîne de plaque intérieure (10).

8. Chaîne de bicyclette selon la revendication 4, le débord de la plaque intérieure côté intérieur (161) étant réduit dans une zone d'extrémité longitudinale inférieure avant (22vu) ainsi que dans une zone d'extrémité longitudinale supérieure arrière (22ho) de la périphérie extérieure (21) de plaque intérieure en comparaison avec le débord dans une zone d'extrémité longitudinale supérieure avant (22vo) et une zone d'extrémité longitudinale inférieure arrière (22hu) de la périphérie extérieure (21) de plaque intérieure de la plaque intérieure côté intérieur (161) et étant de manière préférée négatif au moins par endroits pour chaque maillon de chaîne de plaque extérieure (10),
et le débord de la plaque intérieure côté extérieur (16r) étant réduit dans une région d'extrémité longitudinale supérieure avant (22vo) ainsi que dans une région d'extrémité longitudinale inférieure arrière (22hu) en comparaison avec un débord dans une région d'extrémité longitudinale inférieure avant (22vu) et une région d'extrémité longitudinale supérieure arrière (22ho) de la périphérie extérieure (21) de plaque intérieure de la plaque intérieure côté extérieur (16r) et étant de manière préférée négatif au moins par endroits.

9. Chaîne (K) de bicyclette selon l'une des revendications 4 à 7, avec des plaques de chaîne avec une asymétrie supérieure/inférieure.

10. Ensemble d'entraînement (D) pour une bicyclette (B), avec un pignon plus grand (S1) et un pignon plus petit (S2) adjacent côté extérieur, ainsi qu'avec une chaîne (K) de bicyclette selon l'une des revendications 4 à 9, dans lequel, en raison du débord longitudinal par endroits réduit des plaques intérieures côté intérieur (16l), le flanc porteur (ZL) de la dent (20) de pignon du plus grand pignon (S2) sortant en dernier de la section de chaîne de sortie (K1) n'entre pas en contact avec la périphérie extérieure (21) de la plaque intérieure côté intérieur (161) du premier maillon (10.1) de chaîne de plaque intérieure formant un coude lors du changement de vitesse vers l'extérieur entre les deux pignons (S1, S2).

11. Ensemble d'entraînement (D) selon la revendication 10, une section de chaîne (K2) s'étendant du plus grand pignon (S1) au plus petit pignon (S2) formant une tangente (T) au plus petit pignon (S2) lors du changement de vitesse vers l'extérieur.

12. Système d'entraînement de bicyclette comprenant des roues dentées à nombre pair de dents avec des dents (Z) en alternance épaisses et minces avec une chaîne (K) de bicyclette selon l'une des revendications 4 à 9, ou avec un ensemble d'entraînement (D) selon la revendication 10 ou 11.
